# EUROPEAN PATENT APPLICATION

(11) **EP 1 662 448 A1**
(43) Date of publication of application: **31.05.2006**
(21) Application number: 05257274.0
(22) Date of filing: 25.11.2005
(51) Int. Cl.: G07F 17/32

(54) **Gaming Machine**

(30) Priority: 29.11.2004 JP 2004344319
(71) Applicant: Aruze Corporation, Tokyo 135-0063 (JP)
(72) Inventor: Okada, Kazuo, Tokyo 135-0063 (JP)
(74) Representative: Nicholls, Michael John

(57) **Abstract**

Based on that the player plays the game while putting one of the figures 13A~ 13C on the slot machine 1 (S14: YES), the kind of the figure and the use history of the figure stored in the IC tag 93 embedded in each of the figures 13A ~ 13C are read out (S15) and the change pattern is specified based on the kind of the figure and the use history thereof read out (S16), and the game setting condition determined based on the present date and the change pattern specified are adopted to the slot machine 1.

## Description

The present invention relates to a gaming machine in which a game is conducted based on discriminative information stored in an object, and in particular, relates to a gaming machine in which a game setting condition is changed according to a change pattern of the game setting condition determined based on the object, thereby variegated games can be provided for a player without losing interest.

Conventionally, for example, in a gaming machine such as a slot machine or a card gaming machine, a game is started by inserting game media such as medals into the gaming machine, thereafter a game result is displayed based on a lottery result of an internal lottery conducted within the gaming machine. For example, in the slot machine, predetermined symbols are stopped and displayed on a pay line, and in the card gaming machine, kinds of cards are displayed. And game media with a predetermined number are paid out based on the game result.

Here, the internal lottery to determine the game result is conducted every one game on the basis of a lottery table and the like which are set beforehand in the gaming machine. That is to say, as disclosed in Published Japanese translation of a PCT application No. 2002-537874, a symbol combination stopped on the pay line during a base game or a free game in the slot machine or a number and a mark of a draw card in the card gaming machine is randomly determined without accepting intervention from the outside.

Therefore, among the conventional gaming machines, there exists a gaming machine that a game is conducted by using a special card or a figure which is individually bought by the player, as one means through which the player intervenes in the game. For example, in Unexamined Japanese Publication No. 2002-325972, it is disclosed a gaming machine provided with a new game system in which a RFID reader-writer is connected thereto and a piece with a RFID data carrier is set on the RFID reader-writer or removed therefrom corresponding to aspect of the game, thereby discriminative information and game data stored in the RFID data carrier are read out and the game is conducted by displaying a figure or an item based on the discriminative information or the game data.

However, in the slot machine described in Published Japanese translation of a PCT application No. 2002-537874, a game mode thereof (winning symbol combination and loss thereof) is randomly determined within the gaming machine without accepting intervention from the outside and the game is conducted. At that time, by notifying the lottery result or conducting various effects through images and music sounds to raise interest of the game, it is done device so that the player does not lose interest. But, the player basically conducts only bet operation of the game media such as medals, thus the player cannot conduct intervention operation so as to sway the game result. Therefore, even if the winning symbol combination is won, pleasure of the player is reduced and it cannot be provided the gaming machine through which the player can sufficiently satisfy.

And in Unexamined Japanese Publication No. 2002-325972, it is proposed the gaming machine in which the player can intervene in the game by using the record medium in which the information such as the card or figure is stored. However, conventionally the game is only conducted by uniformly reflecting the information stored beforehand every each card or figure on parameters of characters or items appearing on an image plane. That is to say, if the same card or figure is used, the game is conducted under the same game mode every time, thus the game gradually becomes monotonous according to that the game is continued for a long time and the player lose interest. Therefore, it is desired the game machine in which the player can intervene in the game by using the card or figure and the game can be further variegated so that the card or figure used is not merely reflected only on the characters or items appearing during the game.

In order to dissolve the above problems, the present invention has been done and has an object to provide a gaming machine in which the game result is changed according to the object used by the player every the game is conducted, and even if the game is repeatedly done in the same gaming machine, the game result can be changed, thereby game characteristic can be variegated and the player does not lose interest for games.

In order to accomplish the above object, according to one aspect of the present invention, it is provided a gaming machine comprising:
an object in which discriminative information is stored;
a reading device provided in the gaming machine, the reading device reading out the discriminative information stored in the object;
a plurality of change patterns, each of the change patterns corresponding to the discriminative information and having plural game setting conditions;
a change pattern determination device for determining the change pattern among plural change patterns based on the discriminative information read out by the reading device;
a game setting condition determination device for determining the game setting condition based on the change pattern determined by the change pattern determination device; and
a game control device for controlling a game according to the game setting condition determined by the game setting condition determination device.

According to the gaming machine of the present invention, the change pattern determination device determines the change pattern based on the discriminative information read out by the reading device, and the game setting condition determination device determines the game setting condition based on the change pattern determined by the change pattern determination device, and further the game control device controls the game according to the game setting condition determined by the game setting condition determination device. Therefore, the player can play the game according to the various change patterns corresponding to the object used by the player. And the game result is changed according to the object used by the player every the game is conducted, thereby even if the player repeatedly conducts the games in the same gaming machine, change in the game result can be produced. Accordingly, the game can be variegated and the player does not lose interest for the game.

The above and further objects and novel features of the invention will more fully appear from the following detailed description when the same is read in connection with the accompanying drawings. It is to be expressly understood, however, that the drawings are for purpose of illustration only and not intended as a definition of the limits of the invention.

The invention will be further described by way of example with reference to the accompanying drawings, in which:-
Fig. 1 is a perspective view showing an outline construction of a slot machine according to the first embodiment,
Fig. 2 is a front view showing variable display portions of the slot machine according to the first embodiment,
Fig. 3 is a front view showing a control panel of the slot machine according to the first embodiment,
Fig. 4 is a front view showing figures used in the slot machine according to the first embodiment,
Fig. 5 is a schematic view showing memory areas of an IC tag embedded in the figure of the first embodiment,
Fig. 6 is an exploded perspective view showing a verification unit provided in the slot machine of the first embodiment,
Fig. 7 is a front view showing the verification unit in a state that the figure is put thereon,
Fig. 8 is a schematic view showing symbol columns variably displayed in the variable display portions through the first reel strip to the fifth reel strip,
Fig. 9 is a block diagram schematically showing a control system of the slot machine of the first embodiment,
Fig. 10 is a block diagram of a liquid crystal drive circuit of liquid crystal displays,
Fig. 11 is an explanatory view showing memory areas of a ROM in the first embodiment,
Fig. 12 is an explanatory view showing a payout table including winning symbol combinations and payouts thereof,
Fig. 13 is an explanatory view of change patterns, Fig. 13 (A) is an explanatory view showing a change pattern without the figure, Fig. 13 (B) is an explanatory view showing a change pattern of pattern A1, Fig. 13 (C) is an explanatory view showing a change pattern of pattern B1 and Fig. 13 (D) is an explanatory view showing a change pattern of pattern C1,
Fig. 14 is an explanatory view showing the figures, Fig. 14 (A) is an explanatory view showing the change pattern of pattern A1 when the figure "man soldier" is used, Fig. 14 (B) is an explanatory view showing the change pattern of pattern A2 and Fig. 14 (C) is an explanatory view showing the change pattern of pattern A3,
Fig. 15 is a schematic view showing symbol columns variably displayed in the variable display portions through the sixth reel strip to the eighth reel strip,
Fig. 16 is a schematic view showing the reel strips variably displayed and stopped in each of the variable display portions in a normal mode,
Fig. 17 is a schematic view showing the reel strips variably displayed and stopped in each of the variable display portions in a high possibility mode,
Fig. 18 is a schematic view showing the reel strips variably displayed and stopped in each of the variable display portions in a low possibility mode,
Fig. 19 is a schematic view showing the reel strips variably displayed and stopped in each of the variable display portions in a maximum possibility mode,
Fig. 20 is an explanatory view showing a change pattern selection table in the first embodiment,
Fig. 21 is a flowchart of a main process program in the slot machine according to the first embodiment,
Fig. 22 is a flowchart of a start acceptance process program in the slot machine according to the first embodiment,
Fig. 23 is a flowchart of a lottery process program in the slot machine according to the first embodiment,
Fig. 24 is a flowchart of a base game process program in the slot machine according to the first embodiment,
Fig. 25 is a flowchart of a bonus game process program in the slot machine according to the first embodiment,
Fig. 26 is a flowchart of a history renewal process program in the slot machine according to the first embodiment,
Fig. 27 is a front view showing an image displayed on a lower liquid crystal display when an effect process to start the bonus game is conducted,
Fig. 28 is a front view showing the image displayed on the lower liquid crystal display when the effect process to start the bonus game is conducted,
Fig. 29 is a flowchart of the start acceptance process program in the slot machine according to the second embodiment,
Fig. 30 is a flowchart of the lottery process program in the slot machine according to the third embodiment,
Fig. 31 is an explanatory view showing a winning symbol combination lottery table for the normal mode according to the third embodiment, and
Fig. 32 is an explanatory view showing a winning symbol combination lottery table for the high possibility mode according to the third embodiment.

Hereinafter, as for the gaming machine according to the present invention, the slot machine embodying the present invention will be described in detail based on the first to third embodiments with reference to the drawings.

### (First Embodiment)

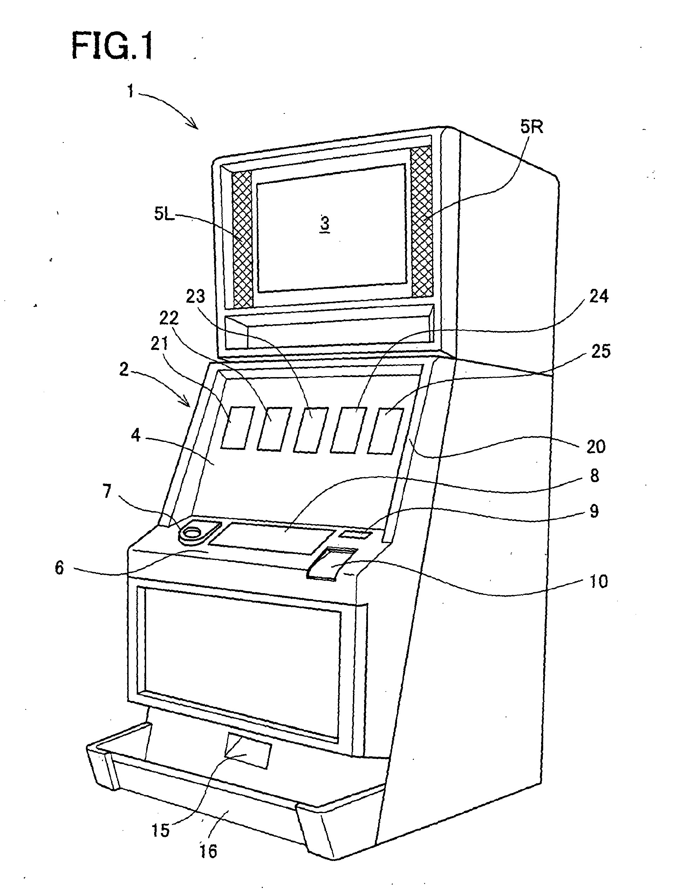

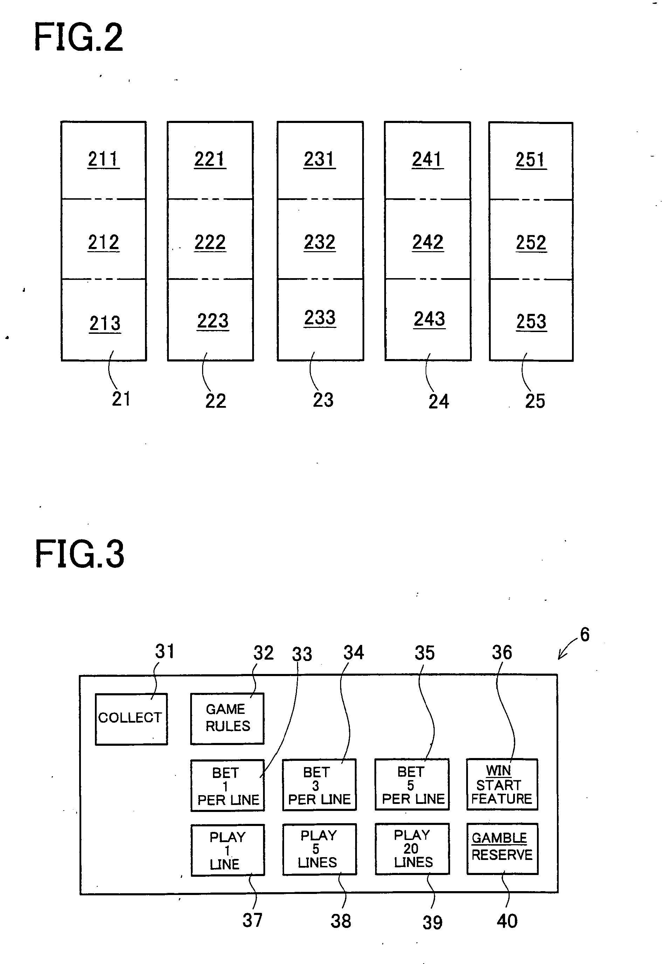

Here, although the slot machine 1 according to the first embodiment is a slot machine using, so-called, video reels, the game can be done based on symbol columns changing according to the present date and effects corresponding to a figure put on the slot machine. At first, an outline construction of the slot machine 1 according to the first embodiment will be described with reference to Figs. 1 to 3. Fig. 1 is a perspective view showing an outline construction of the slot machine according to the first embodiment. Fig. 2 is a front view showing variable display portions of the slot machine according to the first embodiment. And Fig. 3 is a front view of a control panel provided on the slot machine according to the first embodiment.

In Fig. 1, the slot machine 1 has a cabinet 2 which forms a whole construction thereof. And at a front upper position of the cabinet 2 an upper liquid crystal display 3 is provided and on a device front panel 20 disposed in a front center position of the cabinet 2 a lower liquid crystal display 4 is provided. Here, the upper liquid crystal display 3 and the lower liquid crystal display 4 are constructed from the liquid crystal displays which are generally used.

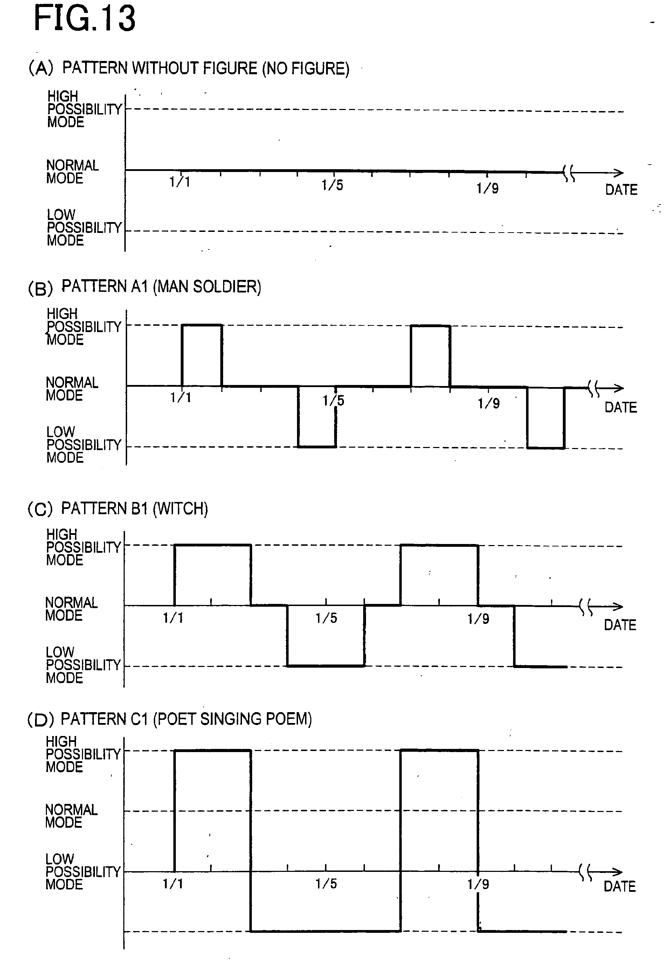

And a pair of speakers 5L, 5R are disposed at the right and left positions of the upper liquid crystal display 3. These speakers 5L, 5R output predetermined BGM (Background Music), voices, effect sounds and the like to the player, based on the game mode in the slot machine 1. Further, at an under position of the lower liquid crystal display, a control panel 6 protruded frontward is arranged. On the control panel 6, in order from the left side, there are provided a verification unit 7 on which a figure 13 mentioned later is put on, an operation panel 8 on which various buttons are arranged, a coin insertion slot 9 for inserting game media such as coins and a bill insertion portion 10 for inserting bills.

Here, the figure 13 and the verification unit 7 will be described in detail hereafter.

On the upper liquid crystal display 3, information concerning with the game such as game methods, winning symbol combinations and payouts thereof and various effects is displayed. And on the lower liquid crystal display 4, not only credit number retained by the player at present and various effect images are displayed but also five variable display portions 21, 22, 23, 24 and 25 are displayed in the center thereof. And in the variable display portions 21 to 25, various symbols mentioned later are variably displayed while scrolling from an upper direction toward a lower direction and are stopped and displayed with a predetermined symbol combination after a predetermined time elapses.

Therefore, the slot machine 1 of the first embodiment is, so-called, the video slot machine in which a slot game (generally constructed from two kinds of a base game and a bonus game) is conducted by using the video reels which are realized by displaying those through the variable display portions 21 to 25 of the lower liquid crystal display 4. Here, in the slot game (base game and bonus game) of the first embodiment, three symbols are stopped and displayed in each of the variable display portions 21 to 25, thus 15 symbols are totally displayed in the variable display portions 21 to 25.

Concretely, as shown in Fig. 2, the variable display portions 21 to 25 are respectively divided into the first stop display areas 211, 221, 231, 241, 251, the second stop display areas 212, 222, 232, 242, 252 and the third stop display areas 213, 223, 233, 243, 253. And three symbols are respectively stopped and displayed in the stop display areas 211 ~ 213, 221, - 223, 231 - 233, 241 - 243, 251 ~ 153, based on a lottery result by an internal lottery mentioned later.

Further, in the slot game (base game and bonus game), there exist 20 pay lines constructed from 5 stop display areas among the stop display areas 211 - 213, 221 - 223, 231 - 233, 241 - 243, 251 - 253. If each of the pay lines is activated and specific symbols are aligned with a specific display mode along the activated pay line when the symbols are stopped and displayed, a predetermined payout is given to the player. Here, each of the pay lines will be described.

The first pay line L1 is constructed from the second stop display areas 212, 222, 232, 242, 252. The second pay line L2 is constructed from the first stop display areas 211, 221, 231, 241, 251. The third pay line L3 is constructed from the stop display areas 213, 223, 233, 243, 253. Similar to this, the fourth pay line L4 to twentieth pay line L20 are respectively constructed by using five stop display areas among the stop display areas 211 - 213, 221 - 223, 231 - 233, 241 - 243, 251 - 253.

Here, among 20 pay lines, the pay line activated based on operation of each of bet buttons (BET 1 PER LINE button 33, BET 3 PER LINE button 34, BET 5 PER LINE button 35), is called as "activated pay line".

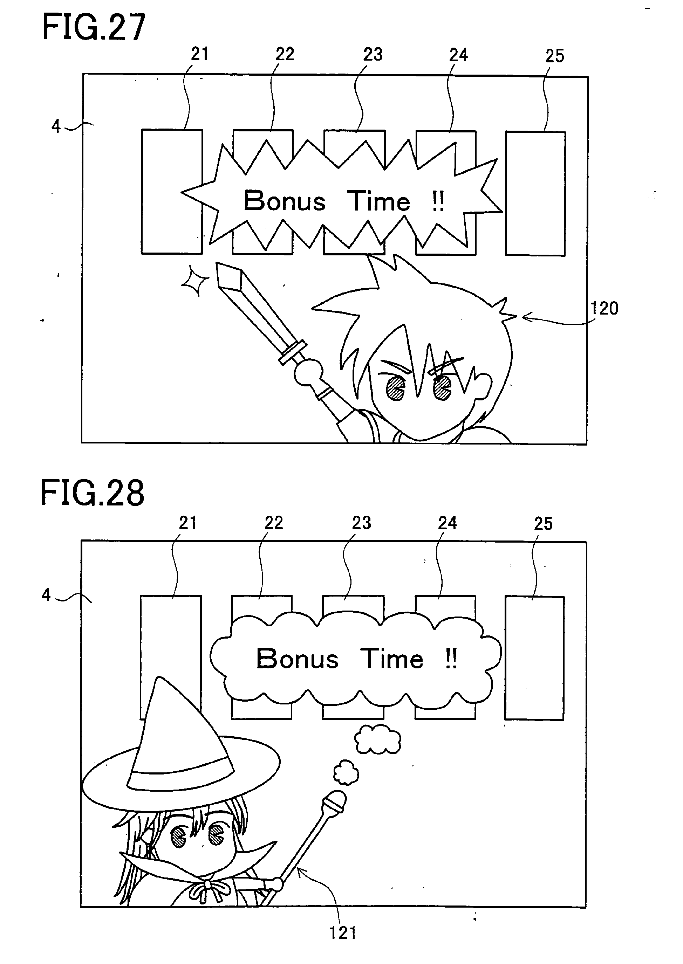

And in a case that a predetermined trigger symbol is stopped on the activated pay line and a game state shifts to the bonus game, characters "BONUS TIME!!" are displayed in the display area of the lower liquid crystal display 4, and further if the figure 13 is put on the verification unit 7, an image corresponding to a shape of a character of the figure 13 is displayed for a predetermined time (3 seconds in the first embodiment), thereby it is notified to the player that the game state shifts to the bonus game (see Figs. 27 and 28).

Here, as for the method to notify to the player that the game state shifts to the bonus game, such method is not limited to the above method. For example, the image corresponding to the figure 13 may be displayed on the upper liquid crystal display 3 and the sounds corresponding to the figure 13 may be output.

On the operation panel 8 provided on the control panel 6, various operation buttons are arranged. With reference to Fig. 3, each of the operation buttons will be concretely described. In an upper step from the most left side on the operation panel 8, a COLLECT button 31 and a GAME RULES button 32 are arranged. And a BET 1 PER LINE button 33, a BET 3 PER LINE button 34, a BET 5 PER LINE button 35, and a WIN START FEATURE button 36 are arranged in a middle step from the most left side. Further, a PLAY 1 LINE button 37, a PLAY 5 LINES button 38, a PLAY 20 LINES button 49, and a GAMBLE RESERVE button 40 are arranged in a lower step from the most left side.

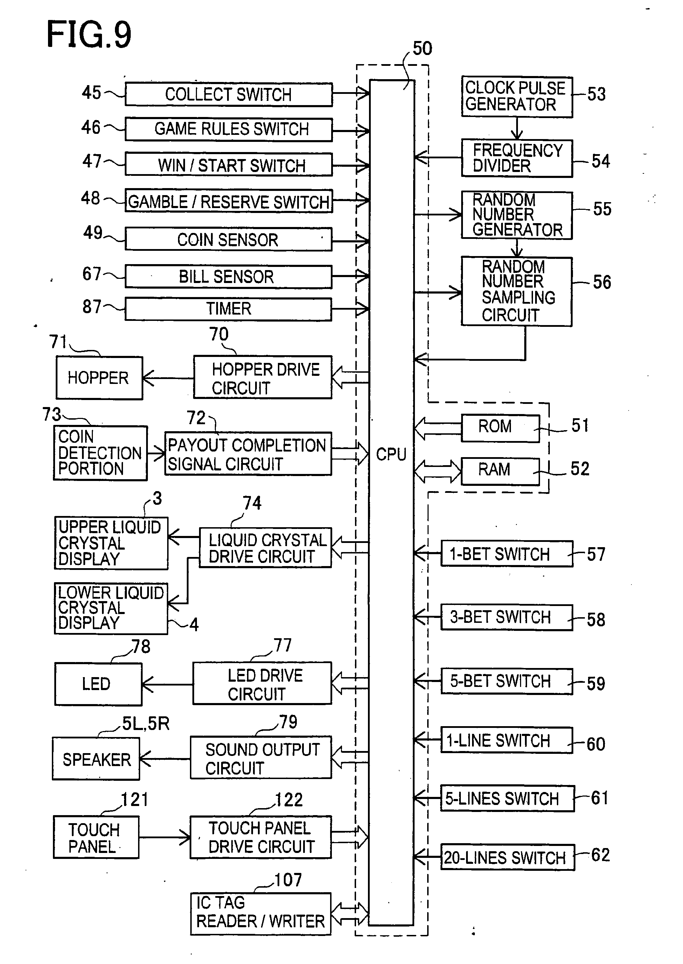

Here, the COLLECT button 31 is a button which is generally pressed when the base game is terminated, and when the COLLECT button 31 is pressed, coins equal to the credits obtained in the game are paid out from a coin payout opening 15 to a coin tray 16. To the COLLECT button 31, a COLLECT switch 45 is attached and a switch signal is output to a CPU 50 from the COLLECT switch 45 on the basis of press of the COLLECT button 31 (see Fig. 9).

The GAME RULES button 32 is a button which is pressed if operation methods of the game cannot be understood, and when the GAME RULES button 32 is pressed, various help information is displayed on the upper liquid crystal display 3 or the lower liquid crystal display 4. To the GAME RULES button 32, a GAME RULES switch 46 is attached and a switch signal is output to the CPU 50 from the GAME RULES switch 46 on the basis of press of the GAME RULES button 32 (see Fig. 9).

The BET 1 PER LINE button 33 is a button to bet one credit to each of the activated pay lines every one press thereof. To this BET 1 PER LINE button 33, a 1-BET switch 57 is attached and when the BET 1 PER LINE button 33 is pressed, a switch signal is output to the CPU 50 from the 1-BET switch 57 (see Fig. 9).

The BET 3 PER LINE button 34 is a button to start the game with 3 bets against each of the activated pay lines on the basis of press thereof. To the BET 3 PER LINE button 34, a 3-BET switch 58 is attached and when the BET 3 PER LINE button 34 is pressed, a switch signal is output to the CPU 50 from the 3-BET switch 58 (see Fig. 9).

And the BET 5 PER LINE button 35 is a button to start the game with 5 bets against each of the activated pay lines on the basis of press thereof. To the BET 5 PER LINE button 35, a 5-BET switch 59 is attached and when the BET 5 PER LINE button 35 is pressed, a switch signal is output to the CPU 50 from the 5-BET switch 59 (see Fig. 9).

Therefore, the bet number betted per one line among the pay lines activated is determined by press of the BET 1 PER LINE button 33, the BET 3 PER LINE button 34, the BET 5 PER LINE button 35.

The WIN START FEATURE button 36 is a button to start a bonus game or add the payout obtained in the bonus game to the credit on the basis of press thereof. To the WIN START FEATURE button 36, a WIN·START switch 47 is attached and when the WIN START FEATURE button 36 is pressed, a switch signal is output to the CPU 50 from the WIN· START switch 47 (see Fig. 9).

The PLAY 1 LINE button 37 is a button to start the game while retaining the number of the activated pay line to "1" on the basis of press thereof. To the PLAY 1 LINE button 37, a 1-LINE switch 60 is attached and when the PLAY 1 LINE button 37 is pressed, a switch signal is output to the CPU 50 from the 1-LINE switch 60 (see Fig. 9).

The PLAY 5 LINES button 38 is a button to start the game while retaining the number of the activated pay line to "5" on the basis of press thereof. To the PLAY 5 LINES button 38, a 5-LINES switch 61 is attached and when the PLAY 5 LINES button 38 is pressed, a switch signal is output to the CPU 50 from the 5-LINES switch 61 (see Fig. 9).

And the PLAY 20 LINES button 39 is a button to start the game while retaining the number of the activated pay line to "20" on the basis of press thereof. To the PLAY 20 LINES button 39, a 20-LINES switch 62 is attached and when the PLAY 20 LINES button 39 is pressed, a switch signal is output to the CPU 50 from the 20-LINES switch 62 (see Fig. 9).

Therefore, the number of the pay line which is activated is determined by press of the PLAY 1 LINE button 37, the PLAY 5 LINES button 38, or the PLAY 20 LINES button 39.

Here, when the PLAY 1 LINE button 37 is pressed, the first pay line L1 is activated. When the PLAY 5 LINES button 38 is pressed, the first pay line L1 ~ the fifth pay line L5 are activated. And when the PLAY 20 LINES button 39 is pressed, all of the first pay line L1 ~ the twentieth pay line L20 are activated.

And each of the PLAY 1 LINE button 37, the PLAY 5 LINES button 38, the PLAY 20 LINES button 39 is a button to start the game with the present bet number and the number of the activated pay lines and has function to start variable display of the symbols on each of the variable display portions 21 to 25 in the lower liquid crystal display 4.

The GAMBLE RESERVE button 40 is a button to be pressed when the player leaves the seat and to shift to the double down game after the bonus game is terminated. Here, the double down game means a game conducted by using the credits obtained in the bonus game. Explanation of the double down game will be omitted.

To the GAMBLE RESERVE button 40, a GAMBLE RESERVE switch 48 is attached and when the GAMBLE RESERVE button 40 is pressed, a switch signal is output to the CPU 50 from the GAMBLE RESERVE switch 48 (see Fig. 9).

To the coin insertion slot 9, a coin sensor 49 is arranged and when a coin is inserted in the coin insertion slot 9, a coin detection signal is output to the CPU 50 through the coin sensor 49 (see Fig. 9) and credit corresponding to the inserted coin is added. And to the bill insertion portion 10, a bill sensor 67 is arranged and when a bill is inserted in the bill insertion portion 10, a bill detection signal is output to the CPU 50 through the bill sensor 67 (see Fig. 9), and credit corresponding to the inserted bill is added.

And at a lower position of the cabinet 2, a coin payout opening 15 is formed and a coin tray 16 for receiving coins paid out from the coin payout opening 15 is provided. Within the coin payout opening 15 it is arranged a coin detection portion 73 (mentioned later) which is constructed from a hopper 71 capable of discharging coins one by one and sensors (see Fig. 9). And the coin detection portion 73 counts the number of coins paid out from the coin payout opening 15. Further, instead that coins are directly paid out, it may be discharged a sheet like a receipt on which the number of coins (game values) is printed. At that time, the player can exchange the sheet with goods and the like by bringing it to the counter of the game arcade.

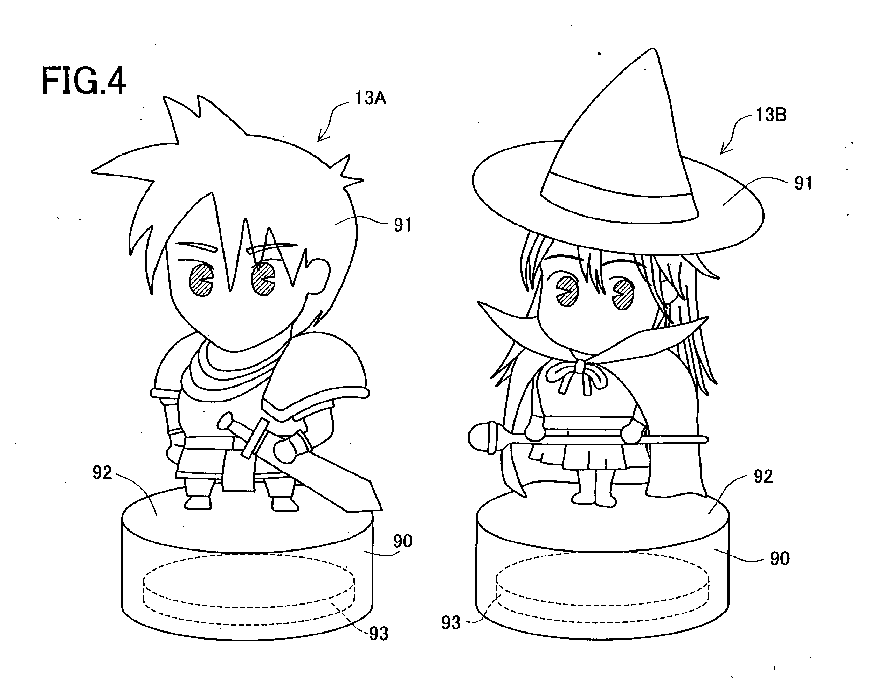

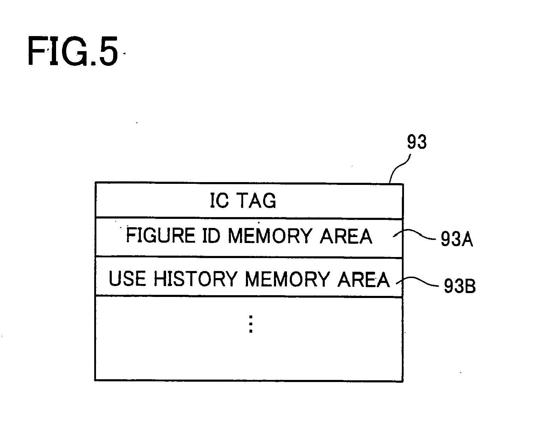

Next, with reference to Figs. 4 and 5, it will be described the figure 13 used in the game conducted in the slot machine 1 according to the first embodiment and the verification unit 7 for reading and writing the information of an IC tag embedded in the figure 13 put on the slot machine 1.

At first, with reference to Figs. 4 and 5, the figure 13 will be described. Fig. 4 is a front view showing the figure of the first embodiment. Fig. 5 is a schematic view showing memory areas of the IC tag embedded in the figure according to the first embodiment.

As shown in Fig. 4, the figure 13 of the first embodiment is basically constructed from a stand portion 90 and a figure body 91.

The stand portion 90 has a diameter corresponding to the verification unit 7 mentioned later and is formed in a thick circle plate with a hollow construction. And on an upper plane 92 of the stand portion 9, the figure body 91 is fixed. On the contrary, the IC tag 93 is embedded and fixed on the bottom portion of the stand portion 90. The 1C tag 93 is as same as that which is generally sold in the market, and such IC tag 93 is constructed from an IC chip having a memory and a transmitting-receiving portion and an antenna connected to the IC chip. The IC tag 93 is formed into a coin-like shape. And the IC tag 93 used in the slot machine 1 of the first embodiment is especially a read-write type of IC tag capable of rewriting the information therein. Further, as mentioned later, in the IC tag 93 it is stored a figure ID peculiar to the character corresponding to the figure body 91 and a number of times according to which the figure 13 is used in the slot machine 1 (see Fig. 5).

On the other hand, the figure 13 is made of synthetic resin and shaped in an outline shape of a doll forming a specific character. Here, as the figure 13 used in the slot machine 1 of the first embodiment, there exist three kinds of figures 13A - 13C formed in "man soldier", "witch", and "poet singing poem", respectively. And the figure body 91 of each of the figures 13A - 13C is respectively fixed on the stand portion 90 in a standing state. In the figure 13A of the "man soldier", a doll representing a man soldier is fixed on the stand portion 90 as the figure body 91 (see Fig. 4). And in the figure 13B of the "witch", a doll representing a witch is fixed on the stand portion 90 as the figure body 91 (see Fig. 4). Further, in the figure 13C of the "poet singing poem", a doll representing a poet singing poem is fixed on the stand portion 90 as the figure body 91. Here, in Fig. 4, among three kinds of the figures, only the figure 13A of the "man soldier" and the figure 13B of the "witch" are specially shown.

And each of the figures 13A - 13C is encapsulated in a capsule and is sold through an exclusive vender machine which is independently provided from the slot machine 1.

And the player can distinguish each of the figures 13A - 13C based on the shape of figure body 91. On the other hand, the slot machine 1 can distinguish each of the figures 13A - 13C by reading out the figure ID stored in the IC tag 93.

Here, memory areas formed in the IC tag 93 embedded in the figure 13 will be described. Fig. 5 is a schematic view showing each of the memory areas in the IC tag.

As shown in Fig. 5, in the IC tag 93, there are formed a figure ID memory area 93A in which the figure ID (for example, figure 13A has "0001", figure 13B has "0002", figure 13C has "0003") being a value peculiar to each of the figures 13A ~ 13C is stored beforehand, and a use history memory area 93B in which a number of times of the game (here, one game means a series of operations that bet operation is conducted based on the credit at present, and the symbols are variably displayed and stopped, and various processes (bonus game process and payout process) are conducted corresponding to a symbol combination stopped and displayed) conducted while using the figure with the IC tag 93 embedded therein is renewed every one game and stored.

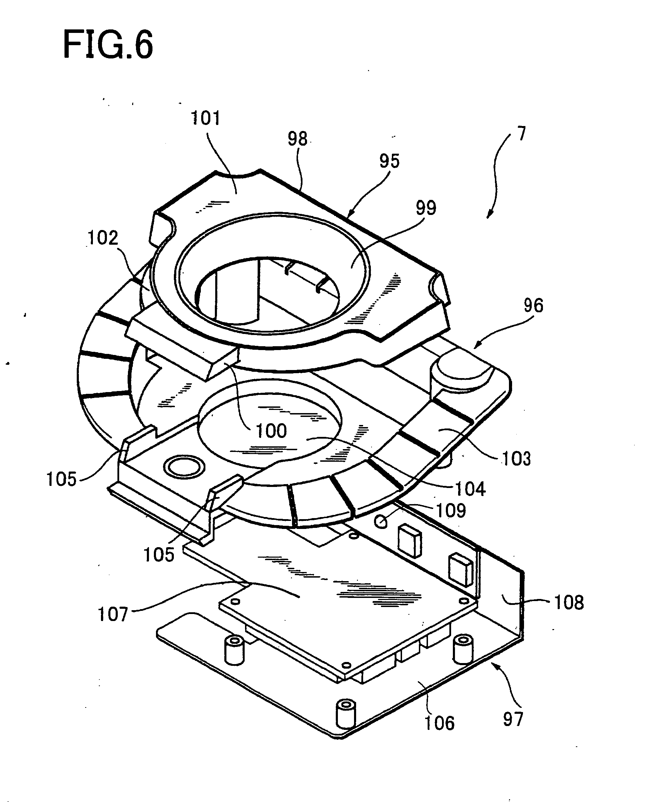

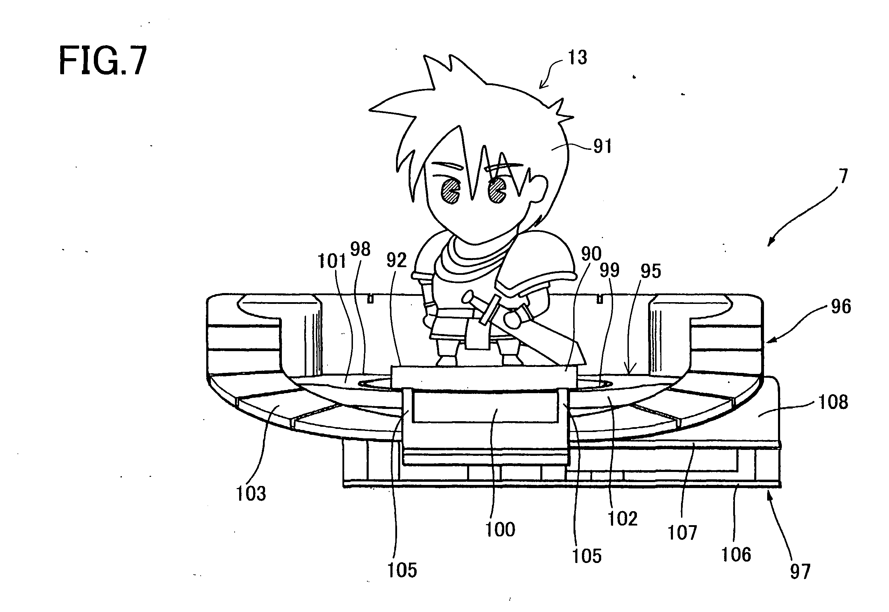

Next, with reference to Figs. 6 and 7, the verification unit 7 provided in the slot machine 1 of the first embodiment will be described. Fig. 6 is an exploded perspective view showing the verification unit 7 provided in the slot machine of the first embodiment. And Fig. 7 is a front view showing the verification unit 7 in a state that the figure is put on.

As shown in Fig. 6, the verification unit 7 according to the first embodiment is basically constructed from a guide member 95 and a hold frame 96 and a base member 97.

The guide member 95 has a body portion 98 formed in a thick plate which is made of transparent urethane material as transparent resin. In the center position of the body portion 98, a tapered guide hole 99 penetrated like a truncated cone is formed. In this guide hole 99, an opening area at an upper side is wider than that at a lower side, and the guide hole 99 has a shape that a side plane is inclined toward the inner side. The opening area at the lower side is made substantially as same as the area of the bottom side in the stand portion 91 of the figure 13.

And at the front end of the guide member 95, a protrusion 100 is formed. The protrusion 100 is disposed at the front plane of the body portion 98 and formed into one-piece construction. Further, on an upper plane of the body portion 98 of the guide member 95, a light shield member 101 like a seal is adhered on a periphery area of the guide hole 99.

Surface of the light shield member 101 is colored in black and has function to shield light emitted from a full-color LED 109 mentioned later. And on an outer portion than the light shield member 101 of the body portion 98, it is provided a notification portion 102 on which notification light is displayed so as to turn on or blink. And on the notification portion 102 light is displayed corresponding to the game state in the slot machine 1, thereby the present game state of the slot machine 1 is notified to the player.

And the hole frame 96 is formed substantially in a trapezoid shape and is a hold member to hold the guide member 95 by setting the guide member 95 therein. Further, the hold frame 96 has a frame member 103 which covers the periphery of the body portion 98 when the guide member 95 is set in. And at a bottom center position of the frame member 103, it is formed a seat portion 104 in which the stand portion 90 of the figure 13 is set, thereby the figure 13 can be put on the seat portion 104.

In the seat portion 104, a diameter of the seat portion 104 is formed slightly larger than that of the stand portion 90 in the figure 13, thereby the seat portion 104 is formed into a cylindrical space, so that the stand portion 90 and the seat portion 104 can be set in with each other while the stand portion 90 retains a slight room against the seat portion 104 and a predetermined relation is retained therebetween. Further, a depth of the seat portion 104 is set slightly lower than a height of the stand portion 90. And as shown in Fig. 7, based on that the stand portion 90 is set in the seat portion 104, the figure 13 is prevented from overturning.

And at a front position of the frame member 103, protrusion guide members 105 are formed. The protrusion guide members 105 are formed in a position and a size so as to cover the surface of the protrusion portion 100 when the body portion 98 of the guide member 95 is set in the hold frame 96.

Further, the base member 96 positioned at a lower position of the hold frame 96 is constructed from a base body 106 and an IC tag reader/writer 107 disposed on the base body 106. The IC tag reader/writer 107 is provided with a controller, a data transmitting-receiving portion and an antenna. In particular, the antenna portion conducting data transmission of the IC tag data is arranged so as to position right under the seat portion 104 of the hold frame 96. Therefore, the antenna portion can certainly conduct data transmission with the IC tag 93 embedded in the stand portion 90 in the figure 13 which is put on the seat portion 104.

And the IC tag reader/writer 107 constructed according to the above is connected to the CPU 50 mentioned later and is controlled by the CPU 50 so as to conduct the read and write process against the IC tag 93. Here, in the first embodiment, although data transmission is done through the non-contact manner, such data transmission can be, of course, done by the contact-manner.

And the base portion 97 has a rear plate 108 formed at the rear side thereof and raised upward and the full-color LED 109 is attached to the rear plate 108. The full-color LED 109 emits light with a predetermined illumination mode corresponding to the game state in the slot machine 1, thereby the present game state is notified to the player through the notification portion 102.

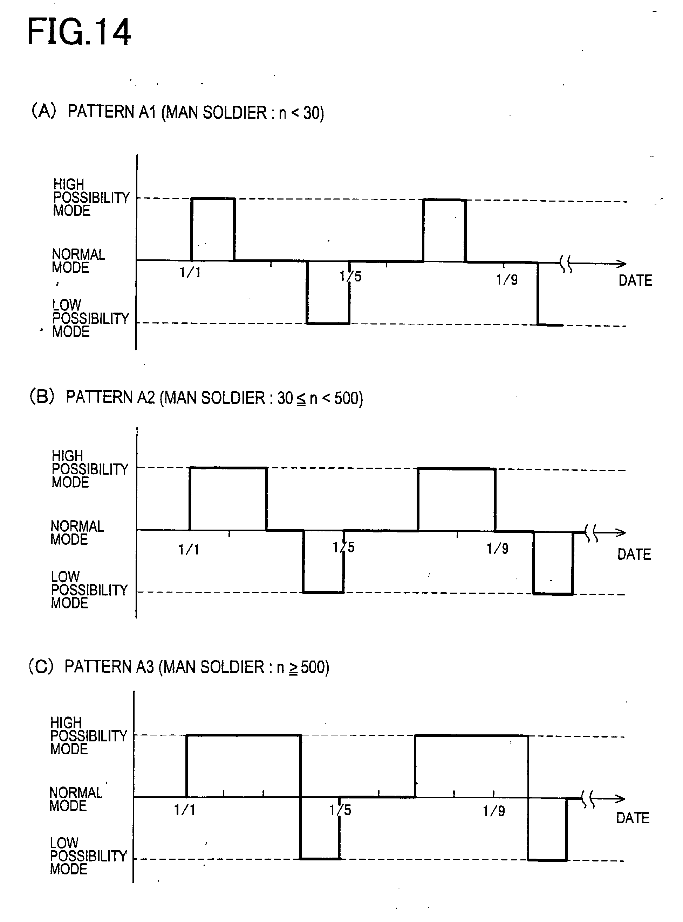

In the slot machine 1 of the first embodiment in which the verification unit 7 constructed according to the above is provided, when the player inserts coins in the coin insertion slot 9 and thereafter bet acceptance is terminated, the CPU 50 determines through the IC tag reader/writer 107 whether or not any of the figures 13A - 13C is put on the verification unit 7. If the CPU 50 determines that none of the figures 13A ~ 13C is put on, the game is conducted according to a variable display pattern of "pattern without figure" (see Fig. 13A). And if the CPU 50 determines that one of the figures 13A - 13C is put on, the game is conducted according to each of the variable display patterns "pattern A1 ~ A3", "pattern B1 ~ B3", "pattern Cl ~ C3, respectively (see Figs. 13 and 14).

Here, each of the above variable display patterns is a pattern in which a change mode at the time that the game setting condition of the slot machine 1 is changed is set along the time axis. Detail explanation thereof will be described hereinafter.

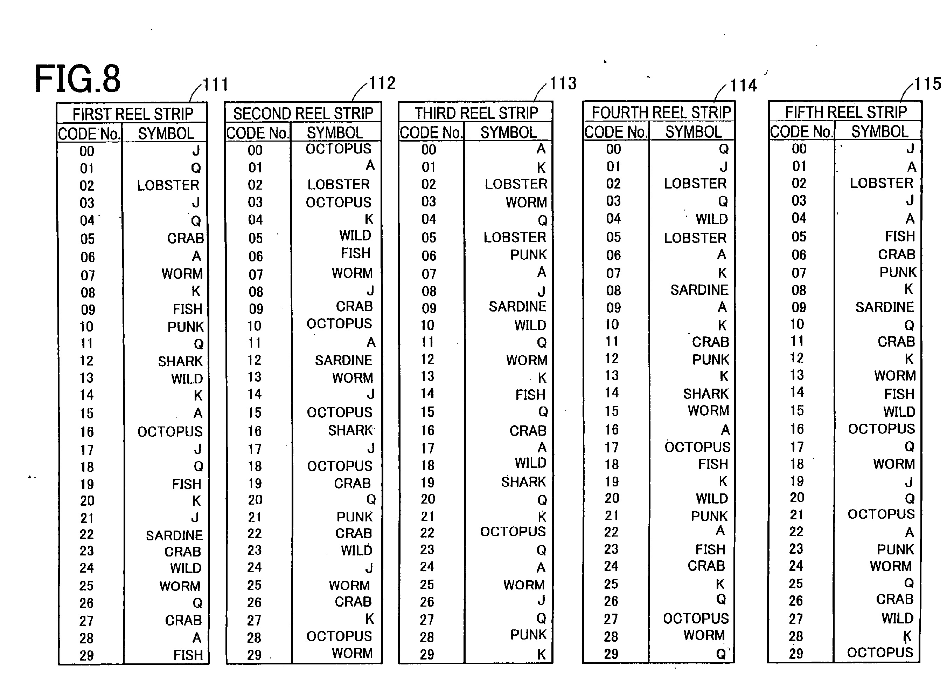

Next, with reference to Fig. 8, it will be described symbol columns which are variably displayed while scrolling in each of the variable display portions 21 to 25 of the lower liquid crystal display 4 when the base game and the bonus game are conducted. In Fig. 8, the symbol column indicated by a first reel strip 111 corresponds to a symbol column variably displayed on the variable display portion 21, the symbol column indicated by a second reel strip 112 corresponds to a symbol column variably displayed on the display portion 22, the symbol column indicated by a third reel strip 113 corresponds to a symbol column variably displayed on the variable display portion 23, the symbol column indicated by a fourth reel strip 114 corresponds to a symbol column variably displayed on the variable display portion 24 and the symbol column indicated by a fifth reel strip 115 corresponds to a symbol column variably displayed on the variable display portion 25.

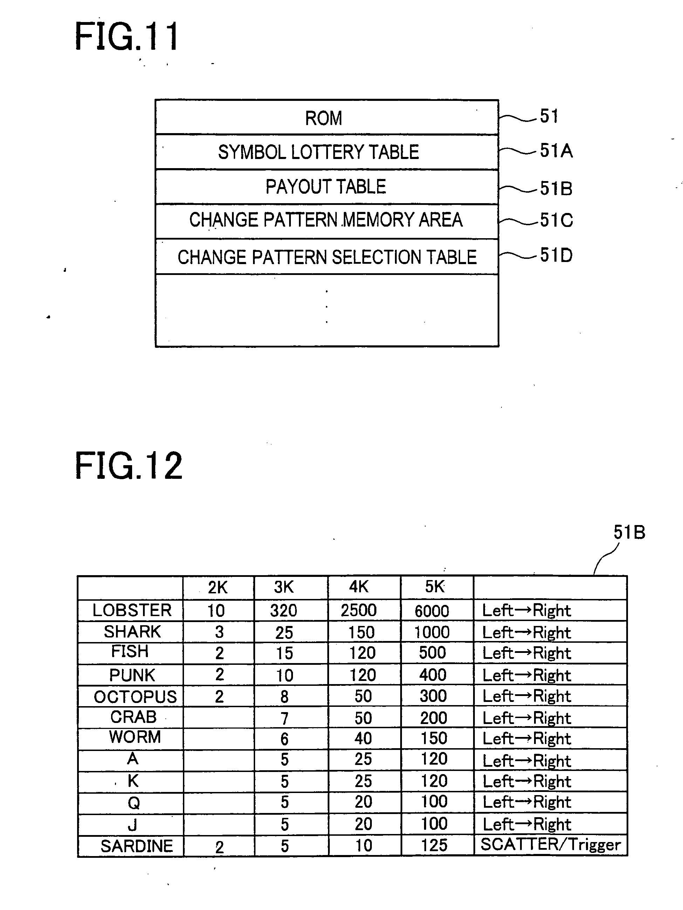

Here, the dot data to form the symbol columns indicated by the first reel strip 111 to the fifth reel strip 115 are stored in the image ROM 82 (see Fig. 11).

Here, the symbol columns respectively indicated by the first to fifth reel strips 111 to 115 have different symbol columns with each other and each symbol column is constructed from 13 symbols by voluntarily combining "LOBSTER", "SHARK", "FISH", "PUNK", "OCTOPUS", "CRAB", "WORM", "A", "K", "Q", "J", "WILD" and "SARDINE".

Here, "LOBSTER" shows a symbol lobster. And "SHARK", "FISH", "PUNK", "OCTOPUS", "CRAB", "WORM", "SARDINE" respectively show a shark, a fish, a person having a guitar, an octopus, a crab, a worm and a sardine. And each of "A", "K", "Q", "J" and "WILD" shows a symbol of English character (s), respectively.

Further, in a case that "LOBSTER", "SHARK", "FISH", "PUNK", "OCTOPUS", "CRAB", "WORM", "A", "K", "Q", "J" are stopped and displayed with a predetermined number from the left end of the first to the twentieth pay line L1 ~ L20 therealong, a predetermined credit number is added to the credit obtained by the player (see Fig. 12).

And "SARDINE" is a so-called scatter symbol and if more than two, symbols "SARDINE" are totally stopped and displayed in the variable display portions 21 to 25 with no relation to the activated pay lines, a predetermined credit number is added to the credit obtained by the player (see Fig. 12). Further, as mentioned later, the symbol "SARDINE" is a bonus game shift symbol to shift the game state to the bonus game and if more than four symbols "SARDINE" are totally stopped and displayed in the variable display portions 21 to 25 with no relation to the activated pay lines, the game state can shift to the bonus game.

And the symbol "WILD" is a so-called wild symbol substitutable for any of the symbols except for the symbol "SARDINE" (scatter symbol).

Further, the symbol columns indicated by the first reel strip 111 to the fifth reel strip 115 are scrolled from the upper direction toward the lower direction in the variable display portions 21 to 25 when the game is started by pressing any of the PLAY 1 LINE button 37, the PLAY 5 LINES button 38 and the PLAY 20 LINES button 39, and three symbols are stopped and displayed in each of the variable display portions.

And various winning symbol combinations (see Fig. 12) are preset based on plural kinds of symbol combinations and when the symbol combination corresponding to the winning symbol combination is stopped on the activated pay line, the payout is added to the credit corresponding to the winning symbol combination. Further, with no relation to the activated pay lines, in a case that more than four symbols "SARDINE" are stopped and displayed at the same time; the game state shifts to the bonus game.

Next, it will be described a construction of control system in the slot machine 1 with reference to Fig. 9. Fig. 9 is a block diagram schematically showing a control system of the slot machine.

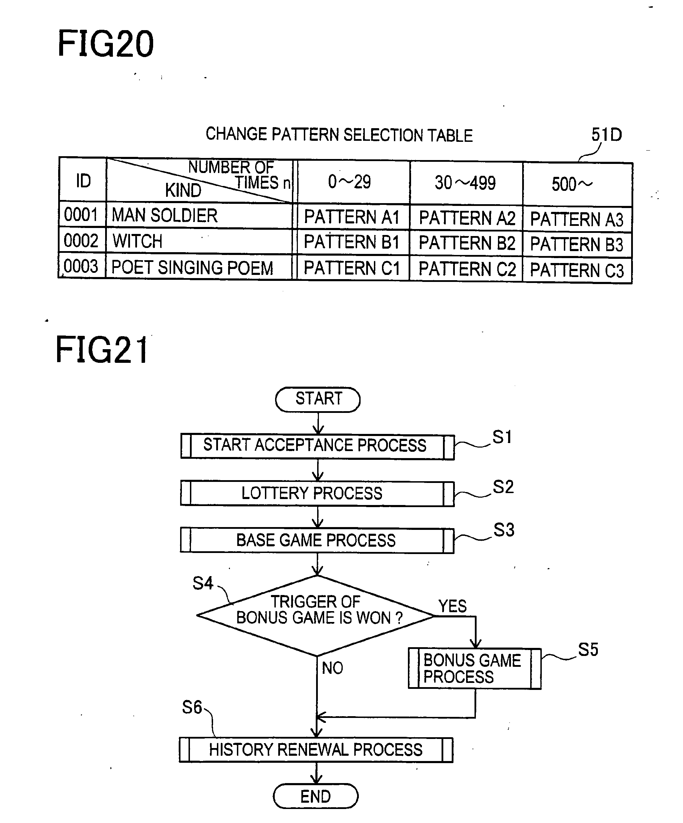

In Fig. 9, the control system of the slot machine 1 is basically constructed from a CPU 50, and a ROM 51 and a RAM 52 are connected to the CPU 50. In the ROM 51, there are stored a main process program mentioned later, a base game process program, a bonus game process program, a symbol lottery table for conducting a lottery of the stop display symbols, a payout table for setting the winning symbol combinations corresponding to the symbol combinations stopped and displayed and the credits paid out based on the winning symbol combinations (see Fig. 12), various change patterns set based on the change against the time axis in the game setting condition of the slot machine 1 (see Figs. 13 and 14), a change pattern selection table used when the change pattern is selected based on various conditions (see Fig. 20), and the other various programs necessary for control of the slot machine 1 and data tables. And the RAM 52 is a memory to temporarily store various data calculated by the CPU 50.

And to the CPU 50, a clock pulse generator 53 for generating standard clock pulses and a frequency divider 54 are connected, and a random number generator 55 for generating random numbers and a random number sampling circuit 56 are also connected. The random number sampled through the random number sampling circuit 56 is utilized in various lotteries of the winning symbol combinations and the like. Further, to the CPU 50, the COLLECT switch 45 attached to the COLLECT button 31, the GAME· RULES switch 46 attached to the GAME RULES button 32, the 1-BET switch 57 attached to the BET 1 PER LINE button 33, the 3-BET switch 58 attached to the BET 3 PER LINES button 34, the 5-BET switch 59 attached to the BET 5 PER LINES button 35, the WIN·START switch 47 attached to the WIN START FEATURE button 36, the 1-LINE switch 60 attached to the PLAY 1 LINE button 37, the 5-LINES switch 61 attached to the PLAY 5 LINES button 38, the 20-LINES switch 62 attached to the PLAY 20 LINES button 39 and the GAMBLE RESERVE switch 48 attached to the GAMBLE RESERVE button 40 are connected, respectively. The CPU 50 conducts control to execute various operations each of which corresponds to each button, based on the switch signal output from each switch by press thereof.

Further, to the CPU 50, the coin sensor 49 arranged in the coin insertion slot 9 and the bill sensor 67 arranged in the bill insertion portion 10 are respectively connected. The coin sensor 49 detects coins inserted from the coin insertion slot 9 and the CPU 50 calculates the number of inserted coins based on the coin detection signal output from the coin sensor 49. The bill sensor 67 detects kinds and sum of the bill inserted from the bill insertion portion 10 and the CPU 50 calculates the credit number equal to the sum of bill, based on the bill detection signal output from the bill sensor 67.

To the CPU 50, a hopper 71 is connected through a hopper drive circuit 70. When a drive signal is output to the hopper drive circuit 70 from the CPU 50, the hopper 71 pays out a predetermined number of coins from the coin payout opening 15.

And to the CPU 50, a coin detection portion 73 is connected through a payout completion signal circuit 72. The coin detection portion 73 is arranged in the coin payout opening 15 and when the coin detection portion 73 detects that a predetermined number of coins are paid out from the coin payout opening 15, a coin payout detection signal is output to the payout completion signal circuit 72 from the coin detection portion 73, thereby the payout completion signal circuit 72 outputs a payout completion signal to the CPU 50. Further, to the CPU 50, the upper liquid crystal display 3 and the lower liquid crystal display 4 are connected through a liquid crystal drive circuit 74, and the upper liquid crystal display 3 and the lower liquid crystal display 4 are controlled by the CPU 50.

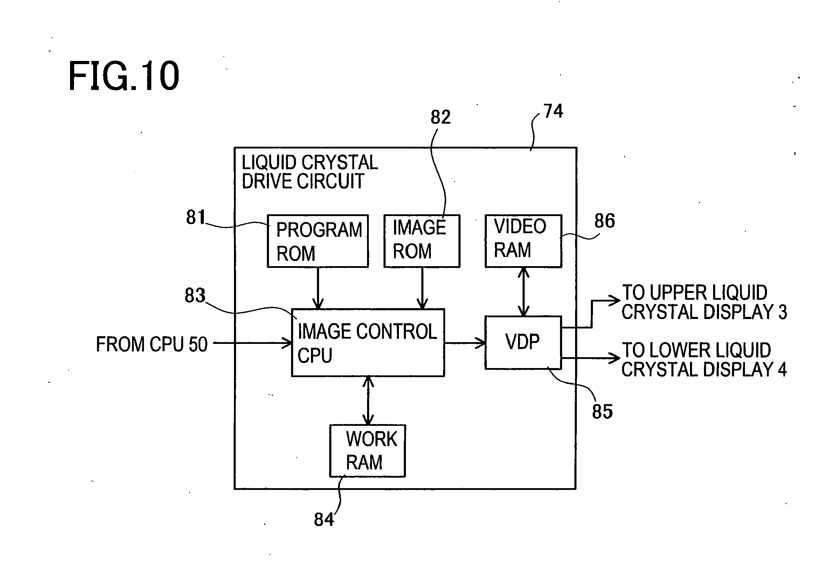

Here, as shown in Fig. 10, the liquid crystal drive circuit 74 is constructed from a program ROM 81, an image ROM 82, an image control CPU 83, a work RAM 84, a VDP (video display processor) 85 and a video RAM 86. And in the program ROM 81, there are stored an image control program for controlling display of the upper liquid crystal display 3 and the lower liquid crystal display 4 and various selection tables. And in the image ROM 82, for example, there are stored dot data for forming images of the symbol columns indicated by the first reel strip 111 to the fifth reel strips 115 of Fig. 8, the sixth reel strip 116 to the eighth reel strip 118 of Fig. 8, effect images corresponding to each of the figures 13A - 13C, such images being displayed on the lower liquid crystal display 4 (or variable display portions 21 to 25).

And the image control CPU 83 determines the images displayed on the upper liquid crystal display 3 and the lower liquid crystal display 4 among the dot data stored beforehand in the image ROM 82, according to the image control program stored beforehand in the program ROM 81 based on parameters set by the CPU 50. Further, the work RAM 84 functions as temporary memory when the image control program is executed by the image control CPU 83. And the VDP 85 forms images corresponding to display contents determined by the image control CPU 83 and outputs such images to the upper liquid crystal display 3 and the lower liquid crystal display 4. Thereby, for example, the symbol columns indicated by the first reel strip 111 to the fifth reel strip 115 are scrolled and displayed on the lower liquid crystal display 4 (or the variable display portions 21 to 25). Here, the video RAM 86 functions as temporary memory when images are formed by the VDP 85.

And to the CPU 50, LEDs 78 are connected through a LED drive circuit 77. Many LEDs 78 are arranged on the front plane of the slot machine 1 and are controlled so as to turn on or turn off by the LED drive circuit 77 based on the drive signal from the CPU 50, when various effects are done. Especially, in the slot machine 1 of the first embodiment, the LEDs 78 are turned on in the bonus game mentioned later, thereby effect is raised.

Further, a sound output circuit 79 and the speakers 5L, 5R are connected to the CPU 50 and the speakers 5L, 5R produce various effect sounds when various effects are conducted based on the output signal from the sound output circuit 79.

Further, to the CPU 50, a timer 87 with calender function is connected. The information of the timer 87 is transmitted to the CPU 50 and the CPU 50 sets various game setting conditions on the basis of the information of the timer 87 (present date) and the change pattern mentioned later.

And in the ROM 51, as shown in Fig. 11, there are stored the symbol lottery table 5 1A for determining the symbols stopped and displayed in each of the stop display areas 211 - 213, 221 - 223, 231 - 233, 241 - 243, 251 - 253 (see Fig. 2) of the variable display portions 21 to 25 based on the random numbers, the payout table 51B storing the winning symbol combinations of the symbols stopped and displayed in each of the stop display areas, the change pattern memory area 51C respectively storing the change patterns every the figure put on the verification unit 7 and the use history and change pattern selection table 51D (see Fig. 20) for selecting the change pattern based on the data read out from the IC tag 93. Here, the change patterns will be described in detain hereinafter.

Next, it will be described the symbol lottery table 51A used when the symbols stopped and displayed in each of the stop display areas 211 ~ 213, 221 ~ 223, 231 ~ 233, 241 - 243, 251 - 253 (see Fig. 2) are determined in a case that the base game and the bonus game are conducted by using five variable display portions 21 to 25 in the slot machine 1.

The symbol lottery table 51A is a lottery table for a lottery to determine the symbols stopped on the first activated pay line L1 constructed from the second stop display areas 212, 222, 232, 242, 252 based on the random numbers sampled through the random number sampling circuit 56. And by determining the symbols stopped in the second stop display areas 212, 222, 232, 242, 252, the symbols stopped and displayed in the first stop display areas and the third stop display areas 211, 213, 221, 223, 231, 233, 241, 243, 251, 253 existing in both the upper line and the lower line of the second stop display areas, are also determined based on the symbol arrangement of the reel strips (see Fig. 8). Concretely, the symbol with the code No., which is smaller by one than the code No. determined on the basis of the random number, is stopped and displayed in the first stop display areas 211, 221, 231, 241, 251, and the symbol with the code No., which is larger by one than the code No. determined on the basis of the random number, is stopped and displayed in the third stop display areas 213, 223, 233, 243, 253.

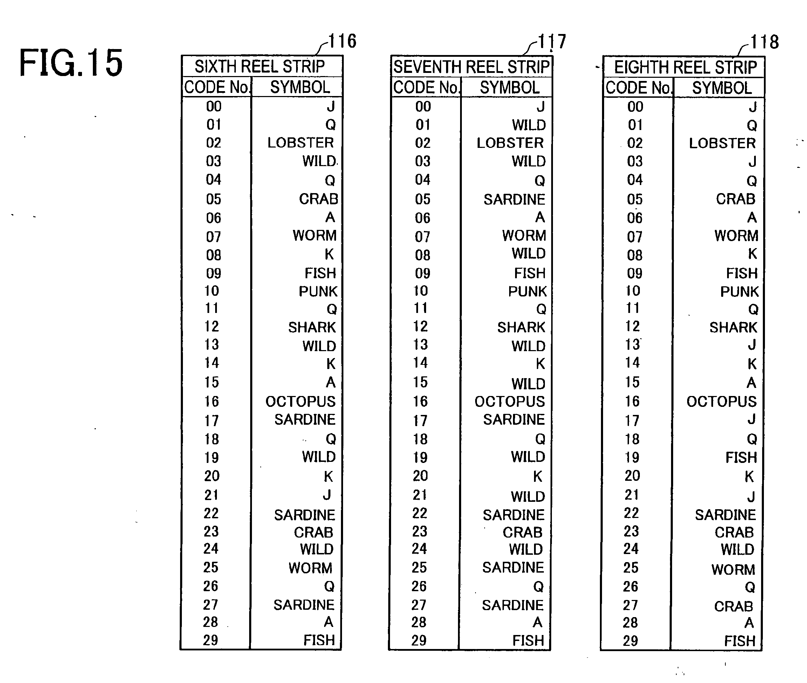

And in the slot machine 1 of the first embodiment, the symbol stopped and displayed on the first activated pay line L1 is determined every each of the variable display portions 21 to 25. In the symbol lottery table 51A, the code Nos. "00" - "29" are respectively allotted to the symbols in each of the symbol columns indicated by the first reel strip 111 to the fifth reel strip 115 in Fig. 8 and the sixth reel strip 116 to the eighth reel strip 118 (see Fig. 15), in order of the upper most symbol.

And the CPU 50 samples five random numbers through the random number sampling circuit 56 so as to correspond to each of the variable display portions 21 to 25 when the game is started, and determines the symbols stopped in the second stop display areas 212, 222, 232, 242, 252 every each of the variable display portions 21 to 25 (for example, if the random number sampled is "9", the symbol "FISH" to which the code No. "09" is allotted is stopped and displayed in the second stop display areas.

Next, in a case that the base game and the bonus game are conducted by using five variable display portions 21 to 25 in the slot machine 1, the winning symbol combinations and the payouts thereof will be described with reference to Fig. 12. Fig. 12 is the payout table 51B in which the winning symbol combinations and the payouts thereof are shown, the payout table 51B being used when the game is conducted by using five variable display portions, and each of the payouts corresponds to the payout in a case that the bet number is "1". Therefore, if the bet number is "1", the payout value shown in Fig. 12 is added to the credit, and if the bet number is more than "2", the payout value calculated by multiplying the payout value in Fig. 12 by the bet number is added to the credit.

Here, concretely describing the winning symbol combinations and, payouts thereof in the base game, as shown in Fig. 12, if the symbols "LOBSTER" are stopped and displayed in series along the activated pay line on the variable display portions 21 and 22 (if two symbols "LOBSTER" appear in series from the left end (this case is called as "2K")), the payout number "10" can be obtained. And if the symbols "LOBSTER" are stopped and displayed in series along the activated pay line on the variable display portions 21 to 23 (if three symbols "WILD" appear in series from the left end (this case is called as "3K")), the payout number "320" can be obtained. Further, if the symbols "LOBSTER" are stopped and displayed in series along the activated pay line on the variable display portions 21 to 24 (if four symbols "LOBSTER" appear in series from the left end (this case is called as "4K")), the payout number "2500" can be obtained. And if the symbols "LOBSTER" are stopped and displayed in series along the activated pay line on the variable display portions 21 to 25 (if five symbols "LOBSTER" appear in series from the left end (this case is called as "5K")), the payout number "6000" can be obtained.

And as for the symbol "SHARK", if the symbols "SHARK" are stopped and displayed in series along the activated pay line on the variable display portions 21 and 22 (if two symbols "SHARK" appear in series from the left end (this case is called as "2K")), the payout number "3" can be obtained. And if the symbols "SHARK" are stopped and displayed in series along the activated pay line on the variable display portions 21 to 23 (if three symbols "SHARK" appear in series from the left end (this case is called as "3K")), the payout number "25" can be obtained. Further, if the symbols "SHARK" are stopped and displayed in series along the activated pay line on the variable display portions 21 to 24 (if four symbols "SHARK" appear in series from the left end (this case is called as "4K")), the payout number "150" can be obtained. And if the symbols "SHARK" are stopped and displayed in series along the activated pay line on the variable display portions 21 to 25 (if five symbols "SHARK" appear in series from the left end (this case is called as "5K")), the payout number "1000" can be obtained.

Hereinafter, similar to the above case, as for the symbol "FISH", the symbol PUNK" (showing a person having a guitar), the symbol "OCTOPUS", the symbol "CRAB", the symbol "WORM", the symbol "A" (English character), the symbol "K" (English character), the symbol "Q" (English character), the symbol "J" ,(English character), the payout for each of the above symbols is set as shown in Fig. 12.

And in a case that the above payout is realized on plural activated pay lines, all payouts are added to the credit.

On the other hand, as for the symbol "SARDINE", the symbol "SARDINE" is the scatter symbol and if two symbols "SARDINE" appear (are stopped and displayed) on the variable display portions 21 to 25 with no relation to the activated pay lines, that is, if the case "2K" is realized, the payout number "2" can be obtained. If three symbols "SARDINE" appear (are stopped and displayed) on the variable display portions 21 to 25 with no relation to the activated pay lines, that is, if the case "3K" is realized, the payout number "5" can be obtained. And if four symbols "SARDINE" appear (are stopped and displayed) on the variable display portions 21 to 25 with no relation to the activated pay lines, that is, if the case "4K" is realized, the payout number "10" can be obtained. Further, if five symbols "SARDINE" appear (are stopped and displayed) on the variable display portions 21 to 25 with no relation to the activated pay lines, that is, if the case "5K" is realized, the payout number "125" can be obtained.

Here, concerning with only the payout obtained by the symbol "SARDINE", the payout number calculated by multiplying the payout number shown in Fig. 12 with the total bet number (a product of the bet number and the number of activated pay line) is added to the credit. At that time, if it exists the payout other than the payout on the basis of the symbol "SARDINE", such payout is also added to the credit.

And as for the symbol "SARDINE", the symbol "SARDINE" is also the trigger symbol to shift to the bonus game, and in a case that more than four symbols "SARDINE" appear (are totally stopped and displayed) on the variable display portions 21 to 25 with no relation to the activated pay lines, not only the above payout can be obtained but also the game state can be shifted to the bonus game.

Hereinafter, the bonus game will be described. Here, the bonus game is a game which is started if a specific condition is satisfied in the base game, and in many cases the bonus game is generally more beneficial for the player. If the game state shifts to the bonus game, 15 - 25 games can be continuously and automatically executed without betting any credits corresponding to a result of the lottery conducted when the game state shifts to the bonus game (so-called free game). ,

Here, as the bet number and the number of activated pay line in the bonus game, the bet number and the number of activated pay line set in the base game are utilized, respectively. And in the bonus game, although the winning symbol combinations and payouts thereof in the bonus game are as same as those in the base game, the symbol "SHARK" is regarded as the symbol "LOBSTER" and if more than four symbols "SARDINE" totally appear (are totally stopped and displayed), the game state in the bonus game can be again shifted to the bonus game. Here, as shown in Fig. 12, if the symbol combination of the symbol "LOBSTER" is won, since the payout of the symbol "LOBSTER" is set higher in comparison with the payout of the symbol "SHARK", the player does not consume the credit in the bonus game, and thereby there is high possibility that the player can obtain a lot of credits.

Next, with reference to Figs. 13 to 19, it will be described the change patterns in a case that the base game and the bonus game are conducted by using five variable display portions 21 to 25 in the slot machine 1. Here, in the slot machine 1 of the first embodiment, when the game is done, any of the figures 13A - 13C (see Fig. 4) is put on the verification unit 7, thereby the symbol column stopped and displayed in the variable display portion 21 is changed from the first reel strip 111 (see Fig. 8) to the other reel strip corresponding to the present date, as a result, possibility to win the winning symbol combination is changed. And the change pattern is a pattern which is peculiarly set to each of the figures 13A - 13C put on and is utilized to change the symbol column based on the present date.

Further, the change pattern is also changed by use history of the figures 13A ~ 13C put on. Concretely, the number of times of the game conducted by using the figure becomes larger, the change pattern becomes more beneficial for the player.

And in the slot machine 1 of the first embodiment, there totally exist nine kinds of the change patterns corresponding to kind of the figure and use history thereof. The figure 13A (man soldier) has three kinds of the change patterns A1, A2, A3, the figure 13B (witch) has three kinds of the change patterns B1, B2, B3 and the figure 13C (poet singing poem) has three kinds of the change patterns C1, C2, C3 (see Fig. 20).

At first, with reference to Fig. 13, the change patterns A1, B1, C1, which become basic for each of the figures 13A - 13C. As for the figure 13 used in the slot machine 1 of the first embodiment, there are three figures 13A ~ 13C (see Fig. 4), which are respectively shaped in three kinds of characters of "man soldier", "witch" and "poet singing poem", as mentioned in the above.

And as shown in Fig. 13, there exist four kinds of the change patterns each of which corresponds to each of the figures, and if the game is conducted without putting any of the figures 13A - 13C, "pattern with no figure" shown in Fig. 13 (A) is used as the change pattern in the slot machine 1. And if the game is conducted while putting the figure 13A (man soldier), "pattern A1" shown in Fig. 13 (B). is used as the change pattern. And if the game is conducted while putting the figure 13B (witch), "pattern B1" shown in Fig. 13 (C) is used as the change pattern. Further, if the game is conducted while putting the figure 13C (poet singing poem), "pattern C1" shown in Fig. 13 (D) is used as the change pattern. Next, each of the change patterns will be described in detail.

In the "pattern with no figure" is, as shown in Fig. 13 (A), the game setting condition of the slot machine 1 is always set to the normal mode in spite of the present date. Here, the normal mode means a state that the symbol column variably displayed and stopped in the variable display portion 21 is set to the first reel strip 111 (see Fig. 8), and in the "pattern with no figure", the game is always done according to the constant game setting condition.

In the "pattern A1", as shown in Fig. 13 (B), the game setting condition in the slot machine 1 is changed among the high possibility mode, the normal mode and the low possibility mode, according to the present date. Here, the high possibility mode corresponds to a state that the symbol column variably displayed and stopped in the variable display portion 21 is set to the sixth reel strip 116 (see Fig. 15). The low possibility mode corresponds to a state that the symbol column variably displayed and stopped in the variable display portion 21 is set to the eighth reel strip 118 (see Fig. 15).

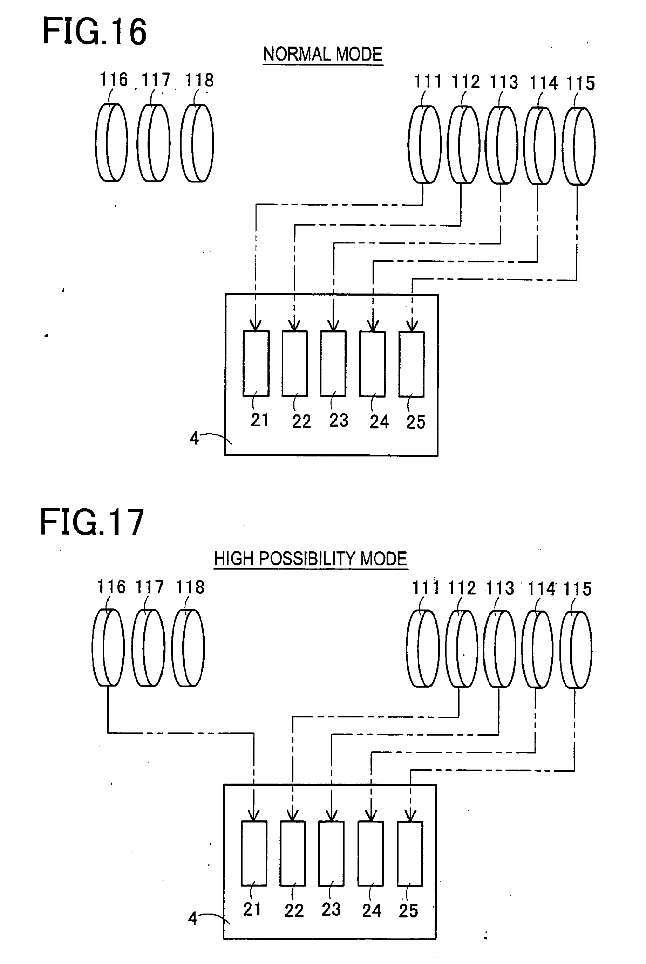

Concretely describing a setting method to set to each of the modes, as shown in Fig. 16, in the normal game setting mode, the game is conducted by using five reel strips of the first reel strip 111 to the fifth reel strip 115. On the other hand, in the high possibility mode, as shown in Fig. 17, the reel strip displayed in the variable display portion 21 is changed from the first reel strip 111 to the sixth reel strip 116.

In the sixth reel strip 116, as shown in Fig. 15, the symbol "WILD" and the symbol "SARDINE" are included more than those in the first reel strip, 111, in comparison with the first reel strip 111. Concretely, although only two symbols "WILD" are included in the first reel strip 111, four symbols "WILD" are included in the sixth reel strip 116. And although one symbol "SARDINE" is included in the first reel strip 111, three symbols "SARDINE" are included in the sixth reel strip 116. Here, the symbol "WILD" is the wild symbol which is substitutable for any of the symbols (the symbol "LOBSTER", the symbol "SHARK", the symbol "FISH", the symbol "PUNK", the symbol "OCTOPUS", the symbol "CRAB", the symbol "WORM", the symbol "A", the symbol "K", the symbol "Q", the symbol "J") except for the symbol "SARDINE", and based on that the number of the symbol "WILD" increases in the high possibility mode, the possibility to win any of the winning symbol combinations shown in Fig. 12 increases. Similarly, the symbol "SARDINE" is the scatter symbol capable of obtaining the payout of credits if more than two symbols "SARDINE" are totally stopped and displayed in the-variable display portions 21 to 25 with no relation to the activated pay lines, and in the high possibility mode the possibility that more than tow symbols "SARDINE" are stopped increases. Further, the symbol "SARDINE" is the bonus shift symbol to shift to the bonus game, and based on that the number of the symbol "SARDINE" increases, the possibility to shift to the bonus game increases. Therefore, according to that the game setting condition at present shifts to the high possibility mode, the player can get more payout with the same bet number in comparison with the normal mode (payout rate increases).

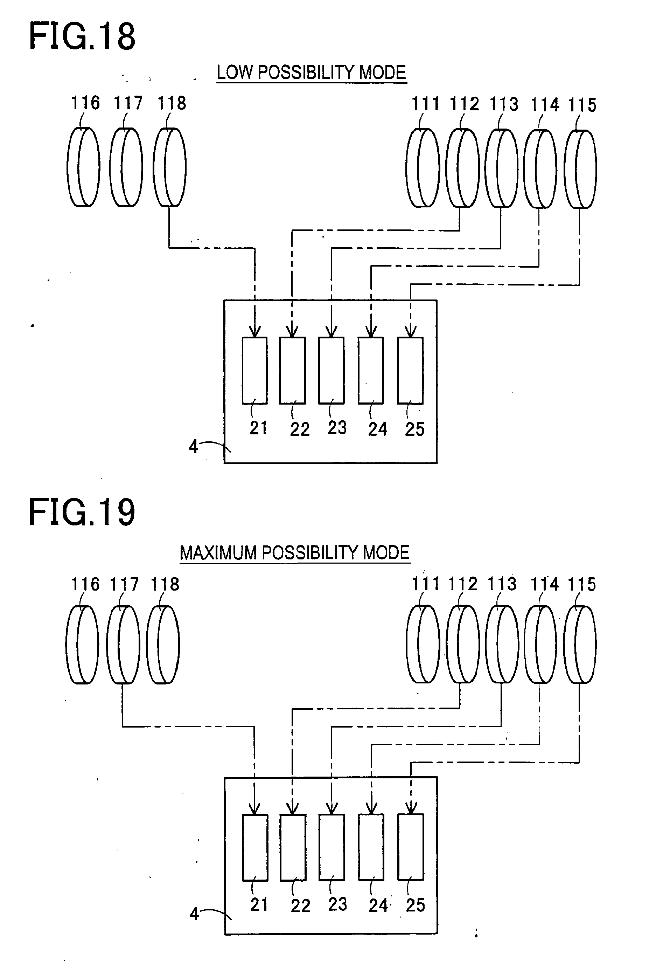

On the other hand, in the low possibility mode, as shown in Fig. 18, the reel strip 111 displayed in the variable display portion 21 is changed to the eighth reel strip 118. As shown in Fig. 15, in the eighth reel strip 118, the number of the symbol "WILD" is less in comparison with the first reel strip 111. Concretely, in the first reel strip 111 two symbols "WILD" are provided, and on the contrary, in the eighth reel strip only one symbol "WILD" is provided. Therefore, due to that the game setting condition at present shifts to the low possibility mode, the payout given to the player becomes less than that in the normal mode even if the same bet number is betted (payout rate decreases).

And in the "pattern A1", the game setting condition of the slot machine 1 is changed according to the date as "high possibility →normal mode→normal mode→low possibility mode→normal mode→normal mode→high possibility mode···". Therefore, in comparison with the case that the other figures 13B, 13C are put on, the game can be done based on comparatively stable game setting condition (game setting condition with less changes).

And in the "pattern B1", as shown in Fig. 13 (C), the game setting condition of the slot machine 1 is changed among the high possibility mode, the normal mode and the lower possibility mode according to the date at present. Concretely, the game setting condition of the slot machine 1 is changed according to the present date as "high possibility mode→high possibility mode→normal mode→lower possibility mode→low possibility mode→normal mode→high possibility mode···". Therefore, in comparison with the change pattern of the "pattern A1" that the figure 13A is put on, the term set in the normal mode is reduced, thus the game can be done based on the game setting condition with high gambling characteristic (game setting condition with more changes).

Further, in the "pattern C1", as shown in Fig. 13 (D), the game setting condition is changed between the maximum possibility mode and the low possibility mode according to the date at present. Here, the maximum possibility mode is the mode that the symbol column variably changed and stopped in the variable display portion 21 is set to the seventh reel strip 117 (see Fig. 15).

Concretely describing the maximum possibility mode, as shown in Fig. 19, in the maximum possibility mode, the reel strip displayed in the variable display portion 21 is changed from the first reel strip 111 to the seventh reel strip 117. In the seventh reel strip 117, as shown in Fig. 15, the symbol "WILD" and the symbol "SARDINE" are included more than those in the first reel strip 111 and the sixth reel strip 116, in comparison with the first reel strip 111 and the sixth reel strip 116. Concretely, although two symbols "WILD" are included in the first reel strip 111 and four symbols "WILD" are included in the sixth reel strip 116, eight symbols "WILD" are included in the seventh reel strip 117. And although one symbol "SARDINE" is included in the first reel strip 111 and three symbols "SARDINE" are included in the sixth reel strip 116, five symbols "SARDINE" are included in the seventh reel strip 117. Therefore, based on that the game setting condition at present shifts to the maximum possibility mode, the player can obtain extremely many payout (coins) with the same bet number in comparison with the normal mode (payout rate increases).

And in the "pattern C1", the game setting condition of the slot machine 1 is changed according to the date as "maximum possibility mode→maximum possibility mode → low possibility mode → low possibility mode → low possibility mode → low possibility mode→maximum possibility mode...". That is to say, in comparison with the change pattern of the "pattern B1" that the figure 13B is put on, the terms beneficial for the player are provided, on the contrary, the terms of the normal mode disappear, thus the terms disadvantageous for the player increase. Therefore, the game can be done based on the game setting condition with extremely high gambling characteristic (game setting condition with extremely many changes).

Further, as the other condition set through the game setting condition ("normal mode", "high possibility mode", "low possibility mode", "maximum possibility mode"), there exist background images displayed on the lower liquid crystal display 4 during the game, in addition to the symbol columns displayed in the variable display portion 21. The background image is displayed with white color in the normal mode, is displayed with yellow color in the high possibility mode, is displayed with blue color in the low possibility mode and is displayed with red color in the maximum possibility mode.

As mentioned in the above, by putting the figures 13A - 13C on the slot machine 1, the player can play the game on the basis of various change patterns each of which is predetermined according to every kind of the figures. In particular, in a case that the player wants to play the game with stability, by putting the figure 13A on the slot machine 1, the play can play the game on the basis of the comparatively stable game setting condition (game condition with less changes). And if the player wants to play the game with gambling characteristic, by putting the figure 13B on the slot machine 1, the player can play the game on the basis of the game setting condition with extremely high gambling characteristic (game setting condition with extremely many changes). Therefore, the player can play the game under variegated game modes according to which the game result changes every playing the game, by using the figures 13. Thus, the player does not lose interest for the games. And the player can select himself/herself the change pattern of the game modes among various change patterns, thus it can be provided the game with high game characteristic satisfying various desires of the player.

Further, since the color of the background image displayed on the lower liquid crystal display 4 is changed based on the game setting condition at present, feelings of the player playing the game can be raised on the basis of the color of the background image, and expectation and tension of the player can be raised against the game result.

Next, with reference to Fig. 14, it will be described the change patterns which change based on the use history of the figures. In the slot machine 1 of the first embodiment, the use history (number of times of the game in the first embodiment) of the figures 13 used is stored in the use history memory area 93B (see Fig. 5) of the IC tag 93, and such history is renewed by the IC reader/writer 107 every the game is done.

And there exist three kinds of the change patterns corresponding to the use history every each of the figures 13A - 13C. Here, hereinafter, explanation is done according to a case that the game is conducted by using the figure 13A (man soldier). Explanation of the cases that the figure 13B (witch) and the 13C (poet singing poem) are used will be omitted.

In the slot machine 1 of the first embodiment, the number of times n according to which the figures 13A - 13C are used in the game is stored as the use history every each of the figures 13A ~ 13C. And in a case that the number of times n is less than 30, the "pattern A1" shown in Fig. 14 (A) is used as the change pattern in the slot machine 1. And if the number of times n is more than 30 and less than 500, the "pattern A2" is used as the change pattern in the slot machine 1. Further, if the number of times n is more than 500, the "pattern A3" shown in Fig. 14 (C) is used as the change pattern in the slot machine 1.

In the "pattern A1", as shown in Fig. 14 (A), the game setting condition of the slot machine 1 is changed according to the present date among the high possibility mode, the normal mode and the low possibility mode. At that time, the change pattern is as same as the basic change pattern of each figure shown in Fig. 13 (concretely, in case of the figure 13A, the change pattern becomes the pattern shown in Fig. 13 (B)).

In the "pattern A2", as shown in Fig. 14 (B), the game setting condition of the slot machine 1 is changed according to the present date between the high possibility mode and the low possibility mode. Concretely, the game setting condition of the slot machine 1 is changed according to the date as "high possibility mode→high possibility mode→normal mode→low possibility mode→normal mode→normal mode→high possibility mode···". Therefore, the terms set in the high possibility mode increase, thus the game can be done based on the game setting condition which is more beneficial for the player.

In the "pattern A3", as shown in Fig. 14 (C), the game setting condition of the slot machine 1 is changed according to the present date among the high possibility mode, the normal mode and the low possibility mode. Concretely, the game setting condition of the slot machine 1 is changed as "high possibility mode→high possibility mode→high possibility mode→low possibility mode→normal mode→normal mode→ high possibility mode···". Therefore, in comparison with the change pattern of the "pattern A2" in which the number of times n is more than 30 and less than 500, the terms set in the high possibility mode further increase, thus the game can be done based on the game setting condition which is further more beneficial for the player.

As mentioned in the above, by repeatedly using the figures 13A ~ 13C in many times in the slot machine 1, the player can play the game based on the change pattern in which the terms set in the high possibility mode gradually increase and which is beneficial for the player. Therefore, chances that the player buys and uses the figures 13A ~ 13C can be increased, thus expectation of the player for the games can be raised and interest for the games can be improved.

Next, with reference to Fig. 20, the change pattern selection table 51D stored in the ROM 51 will be described. In the slot machine 1 of the first embodiment, the change pattern adopted in the game is determined among nine kinds of change patterns including plural change patterns mentioned in the above by using the change pattern selection table 51D.

As shown in Fig. 20, the change pattern selection table 51D is constructed so that the change pattern is specified based on the kind of the figure (three kinds of "man soldier", "witch" and "poet singing poem") and the number of times n. The "pattern A1", the "pattern B1" and the "pattern C1", which are selected every each of the figures 13A - 13C when the number of times n is less than 30, are the change patterns shown in Figs. 13 (B) - 13 (D), respectively. And the "pattern A2" which is selected when the number of times n is more than 30 and less than 500, the "pattern A3" which is selected when the number of times n is more than 500, are the change patterns shown in Figs. 14 (B), 14 (C), respectively. Here, although the "pattern B2", the "pattern B3", the "pattern C2" and the "pattern C3" are not concretely shown, the "pattern B2" becomes the change pattern having the terms which are more beneficial for the player than the "pattern B1". Similarly, the "pattern B3" becomes the change pattern having the terms which are more beneficial for the player than the "pattern B2". Further, the "pattern C2" becomes the change pattern having the terms which are more beneficial for the player than the "pattern C1". And the "pattern C3" becomes the change pattern having the terms which are more beneficial for the player than the "pattern C2".

Next, a main process program of the slot machine 1 according to the first embodiment will be described with reference to Fig. 21. Fig. 21 is a flowchart of the main process program in the slot machine of the first embodiment. Here, each of the programs shown by the flowcharts in Figs. 21 to 26 are stored in the ROM 51 and RAM 52 provided in the slot machine 1, and are executed by the CPU 50.

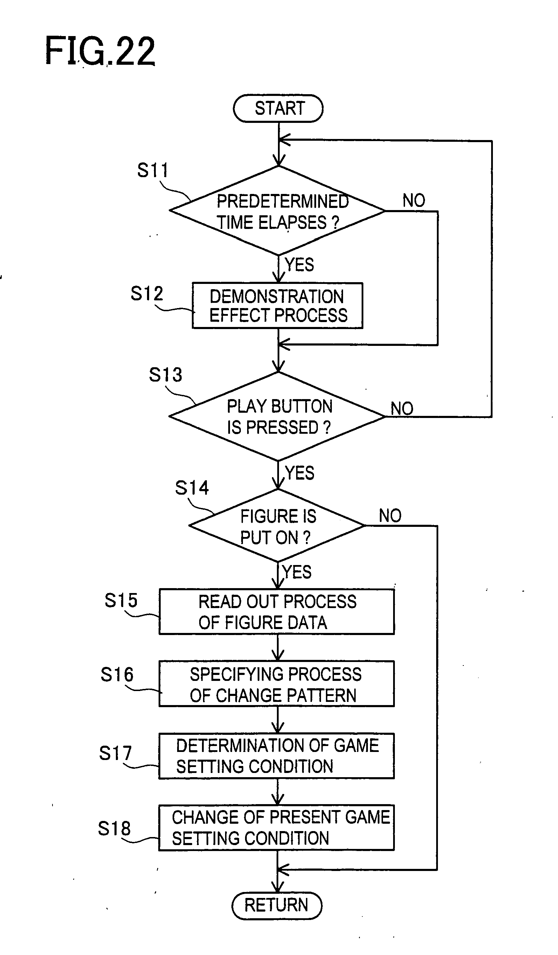

In Fig. 21, at first, in step (abbreviated as "S" hereinafter) 1, a start acceptance process shown in Fig. 22 is executed. This process is a process for accepting the switch signal output from the 1-BET switch 57, the 3-BET switch 58, the 5-BET switch 59, the 1-LINE switch 60, the 5-LINES switch 61, the 20-LINES switch 62 based on operation of the BET 1 PER LINE button 33, the BET 3 PER LINES button 34, the BET 5 PER LINES button 35, the PLAY 1 LINE button 37, the PLAY 5 LINES button 38, the PLAY 20 LINES button 39. When the switch signal output from each switch is accepted, the game is started.

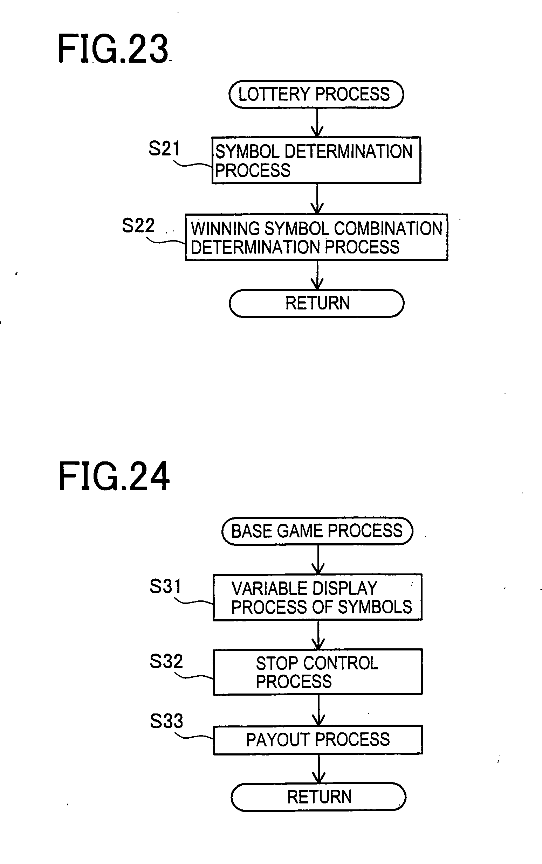

And in S2, a lottery process shown in Fig. 23 mentioned later is executed based on the switch signal output from the 1-LINE switch 60, the 5-LINES switch 61, the 20-LINES switch 62.

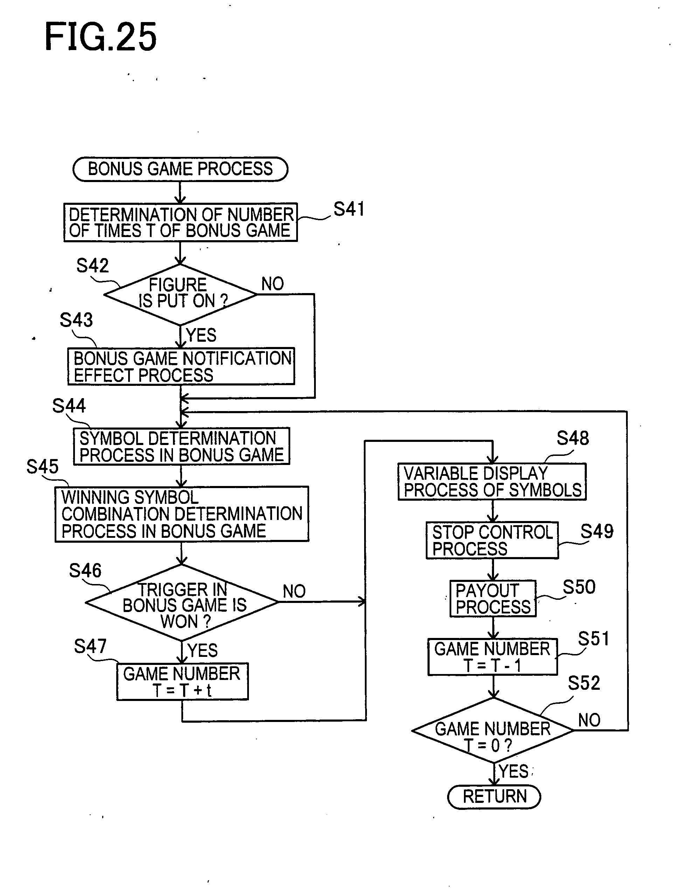

Here, if the bonus game is won (case that more than four symbols "SARDINE" are stopped and displayed at the same time in the variable display portions 21 to 25 with no relation to the activated pay lines), the bonus game mentioned later is executed after the present base game is terminated (see Fig. 25).

Next, in S3, a base game process shown in Fig. 24 mentioned later is executed. Thereafter, procedure shifts to S4 and it is determined whether or not the bonus game is won. Concretely, in the lottery process in S2, if more than four symbols "SARDINE" totally appear (are stopped and displayed) in the variable display portions 21 to 25 with no relation to the activated pay lines, the bonus game is won (S4: YES). Thereby, procedure shifts to S5 and a history renewal process mentioned later is conducted (S6) after the bonus game process shown in Fig. 25 mentioned later is executed. On the other hand, in the lottery process of S2, if more than four symbols "SARDINE" does not totally appear (are not stopped and displayed) on the variable display portions 21 to 25 with no relation to the activated pay lines, the bonus game is not won (S4: NO), thereby the history renewal process is executed at that time (S6). In the renewal process, the use history of the figure is renewed. Thereafter, the main process program is terminated.

Next, the start acceptance process program conducted in S1 in the slot machine 1 will be described with reference to Fig. 22. Fig. 22 is a flowchart of the start acceptance process program in the slot machine 1 of the first embodiment.

In the start acceptance process, at first, it is determined in S11 whether or not a predetermined time (for example, 15 seconds) is elapsed. Here, if it is determined that the predetermined time is not elapsed (S11: NO), procedure shifts to S13, and on the other hand, if it is determined that the predetermined time is elapsed (S11: YES), demonstration effect is done on the upper liquid crystal display 3 or the lower liquid crystal display 4 in S12, thereafter procedure shifts to S13.

And in S13, it is determined whether or not operation of the PLAY 1 LINE button 37, the PLAY 5 LINES button 38, the PLAY 20 LINES button 39 is conducted. Here, if it is determined that operation of the above button such as the PLAY 1 LINE button 37 and the like is not conducted (S13: NO), procedure returns to S11 and the above processes are repeated. On the other hand, if it is determined that operation of the above button such as the PLAY 1 LINE button 37 and the like is conducted (S13: YES), procedure shifts to the determination process of S14 to determine whether or not the figure is put on, even while the demonstration effect is done.

Here, in the determination process in S13, such determination may be conducted based on the other input signals other than the above operation signals.

In S 14, it is determined whether or not one of the figures 13A - 13C (see Fig. 4) is put on the verification unit 7. Concretely, it is determined whether or not data transmission to the IC tag 93 embedded in the stand portion 90 of the figures 13A~ 13C can be done through the IC tag reader/writer 107. And if it is determined that any of the figures 13A - 13C is not put on (S14: NO), the start acceptance process is terminated and procedure shifts to the lottery process (S2).

On the other hand, if it is determined that any of the figures 13A - 13C is put on the verification unit 7 (S14: YES), the data of the IC tag 93 embedded in the figure put on are read out through the IC tag reader/writer 107 (S15). As the data read out, there exist the figure ID having a value every each of the figures 13A - 13C and the number of times n of the game conducted by using the figure in the slot machine 1. Here, one game means a series of operations that bet operation is done based on the credits obtained at present, and the symbols are variably displayed and stopped, and various processes (bonus game process and payout process) are done corresponding to the symbol combination stopped and displayed.

Next, in S 16, the change pattern is specified based on the figure ID read out in S15 and the number of times n. To specify the change pattern, the change pattern selection table 51D (see Fig. 20) is used, and the change pattern is specified among the "pattern A1" to the "pattern C3" based on the kind of the figure 13A, 13B or 13C selected and the number of times n.

And in S17, the game setting condition in the present game is determined according to the change pattern selected in S16 and the present date determined on the basis of the timer 87. The game setting condition concretely determined in the slot machine 1 of the first embodiment corresponds to the symbol column variably displayed in the variable display portion 21 and the background image displayed on the lower liquid crystal display 4. Variable display and stop display of the symbols are done by the symbol column as follows. That is, the symbol column is variably displayed and stopped by the first reel strip 111 in the normal mode, the symbol column is variably displayed and stopped by the sixth reel strip 116 in the high possibility mode, the symbol column is variably displayed and stopped by the eighth reel strip 118 in the low possibility mode and the symbol column is variably displayed and stopped by the seventh reel strip 117 in the maximum possibility mode (see Figs. 15 - 19).

On the other hand, the background image displayed on the lower liquid crystal display 4 is set to the background color as follows. That is, the background color is set to white color in the normal mode, the background color is set to yellow color in the high possibility mode, the background color is set to blue color in the low possibility mode and the background color is set to red color in the maximum possibility mode. Concretely, the image control CPU 83 determines the background image among the dot data stored beforehand in the image ROM 82, according to the image control program stored beforehand in the program ROM 81 based on the parameters set by the CPU 50. And the VDP 85 forms the background image corresponding to display contents determined by the image control CPU 83 and outputs to the lower liquid crystal display 4.

Thereafter, in S18, the present game setting condition in the slot machine 1 is changed to the game setting condition determined in S17. Here, in the slot machine 1 of the first embodiment, although the game setting condition changed is the symbol column variably displayed and stopped in the variable display portion 21, for example, the game setting condition concerning with effect contents displayed on the lower liquid crystal display 4 may be done. And the payout rate may be concretely set (for example, payout rate is set to 95 % or 90 %).

After the game setting condition is changed, the start acceptance process is terminated and procedure shifts to the lottery process (S2).

Next, with reference to Fig. 23 it will be described a lottery process executed in S2 in the slot machine 1 according to the first embodiment. Fig. 23 is a flowchart of the lottery process program executed in the slot machine of the first embodiment.

In the lottery process, at first, the symbol determination process is executed in S21. Here, the symbols stopped and displayed on the first activated pay line L1 in the base game are determined every each of the variable display portions 21 to 25. Concretely, as mentioned above, five random number values corresponding to each of the variable display portions 21 to 25 are sampled by the random number sampling circuit 56 and the code Nos. are determined on the basis of the symbol lottery table 51A. Further, the symbols variably displayed and stopped in each of the variable display portions 21 to 25 are determined, based on the code Nos. and five reel strips used on the basis of the present game setting condition among the first reel strip 111 - the eighth reel strip 118. At that time, although the first reel strip 111 is utilized in the normal mode to variably display and stop the symbol in the variable display portion 21, the sixth reel strip 116 is utilized in the high possibility mode to variably display and stop the symbol in the variable display portion 21, instead of the first reel strip 111. And in the low possibility mode, the eighth reel strip 118 is utilized to variably display and stop the symbol in the variable display portion 21, instead of the first reel strip 111. Further, in the maximum possibility mode, the seventh reel strip 117 is utilized to variably display and stop the symbol in the variable display portion 21, instead of the first reel strip 111.

And after the symbols stopped on the activated pay line are determined, the winning symbol combination determination process is conducted in S22. Thereafter, procedure returns to the main process program and procedure shifts to the base game process in S3. Here, in the winning symbol combination determination process, concretely speaking, the winning symbol combination and the payout thereof are determined based on the symbols determined in S21 and the payout table 51B shown in Fig. 12.

Here, in a case that the slot machine 1 is in the high possibility mode or in the maximum possibility mode, the symbol of the variable display portion 21 is variable displayed and stopped by the sixth reel strip 116 (see Fig. 15) or the seventh reel strip 117 (see Fig. 15), instead of the first reel strip 111. And since the sixth reel strip 116 and the seventh reel strip 117 are set so as to include more symbols "WILD" and more symbols "SARDINE" in comparison with the first reel strip 111, the possibility to win any of the winning symbol combinations becomes high (payout rate increases). On the other hand, in a case that the slot machine 1 is in the low possibility mode, the symbol of the variable display portion 21 is variably displayed and stopped by the eighth reel strip 118 (see Fig. 15) instead of the first reel strip 111. Further, since the eighth reel strip 118 is set to include less symbols "WILD" in comparison with the first reel strip 111, the possibility to win any of the winning symbol combinations becomes low (payout rate decreases).

Next, with reference to Fig. 24, it will be described the base game process conducted in S3 in the slot machine 1 of the first embodiment. Fig. 24 is a flowchart of the base game process program executed in the slot machine 1 of the first embodiment.

In the base game process, at first, in S31, each of the symbols is scrolled and stopped in each of the variable display portions 21 to 25, based on the switch signal output from the 1-LINE switch 60, the 5-LINES switch 61 or the 20-LINES switch 62, the switch signal being accepted in the start acceptance process (S1).

And in S32, scroll of each of the symbols in each of the variable display portions 21 to 25, in which the symbols are scrolled, is stopped.

Further, in S33, according to the winning symbol combination stopped in each of the variable display portions 21 to 25 in S32, the credit corresponding to the payout determined based on the payout table 51B shown in Fig. 12 is paid out. And after such payout process is done, procedure returns to the main process program and shifts to the determination process in S4.

Next, with reference to Fig. 25, it will be described the bonus game process executed in S5 in the slot machine 1 of the first embodiment: Fig. 25 is a flowchart of the bonus game process program executed in the slot machine of the first embodiment.

In the bonus game process, at first, in S41, the game number T of the bonus game is set. The game number T of the bonus game is selected among 10 - 25 games by a lottery, based on the random number value sampled through the random number sampling circuit 56. The game number T of the bonus game is stored in the RAM 52.

Thereafter, in S42, based on the determination result obtained in S14, it is determined whether or not one of the figures 13A ~ 13C is put on the verification unit 7. And if it is determined that any of the figures 13A - 13C is not put on (S42: NO), procedure shifts to S44.

On the other hand, if it is determined that any of the figures 13A - 13C is put on (S42: YES), it is conducted the bonus game notification effect process (S43) to notify to the player that the bonus game is started. In the bonus game notification effect process, based on the data of the IC tag 93 read out in the figure read-out process in S16, the figure put on the verification unit 7 is specified among the figures 13A ~ 13C and the effect corresponding to the shape of the figure is executed for a predetermined time (3 seconds in the first embodiment).

Concretely, if it is determined that figure 13A is put on, the effect image 120 using the character of "man soldier" is displayed on the lower liquid crystal display 4, as shown in Fig. 27. And if it is determined that the figure 13B is put on, the effect image 121 using the character of "witch" is displayed on the lower liquid crystal display 4, as shown in Fig. 28. Further, if it is determined that figure 13C is put on, the effect image (indication thereof is omitted) using the character of "poet singing poem" is displayed on the lower liquid crystal display 4. And in the effect image, characters "Bonus Time!!" are further displayed. Therefore, it can be notified to the player by conducting the above effect that the game state shifts to the bonus game and the player can get feelings as if the bonus game is won in the present time by putting the figures 13A - 13C, thereby interest for the games can be improved. And by conducting variegated effects corresponding to the figures 13A - 13C, the player does not lose interest for the game. Here, instead that the effect is done by using the lower liquid crystal display 4, for example, sounds corresponding to the shape of the character of the figures 13A - 13C may be output from the speakers 5L, 5R.

Next, the symbol determination process in the bonus game is executed in S44. Here, in the bonus game, the symbols stopped and displayed on the first pay line L1 are determined every each of the variable display portions 21 to 25. Concretely, as mentioned in the above, five random number values are sampled through the random number sampling circuit 56 so as to correspond to each of the variable display portions 21 to 25, and code Nos. are determined on the basis of the symbol lottery table 51A. Further, based on the code Nos. and five reel strips used on the basis of the present game setting condition among the first reel strip 111 ~ the eighth reel strip 118, the symbols stopped and displayed in each of the variable display portions 21 to 25 are determined. At that time, if the game setting condition is the high possibility mode, the maximum possibility mode or the low possibility mode, the reel strip selected from the sixth reel strip 116 - the eighth reel strip 118 is used, similar to the process in S21.

And after the symbols stopped and displayed on the activated pay line, in S45, the winning symbol combination and the payout thereof are determined based on the symbols determined in S44 and the payout table 51B shown in Fig. 12. Here, in the bonus game, the symbol "SHARK" is regarded as the symbol "LOBSTER".

Further, in the winning symbol combination determination process in S45, it is determined whether or not the trigger to shift to the bonus game is won (case that more than four symbols "SARDINE" are stopped and displayed at the same time in the variable display portions 21 to 25 with no relation to the activated pay lines) (S46). And if it is determined that the trigger of the bonus game is won (S46: YES), the repeat number of times t of the bonus game is newly determined by a lottery and such repeat number of times t is added to the game number T of the bonus game at present (S47). Thereby, if the bonus game is won during the bonus game, the remaining number of the bonus game increases. Concretely speaking, for example, in a case that procedure shifts to the bonus game with 20 number of times for the first time and the bonus game with 17 number of times is won in the twelfth bonus game, the bonus games are conducted in 25 times (20 times - 12 times + 17 times) thereafter. On the other hand, if it is determined that the trigger of the bonus game is not won (S46: NO), procedure shifts to S48.

And in the symbol scroll process in S48, scroll of each of the symbols is automatically conducted in the variable display portions 21 to 25.

Further, in the stop control process in S49, scroll of each of the symbols scrolling in the variable display portions 21 to 25 is stopped.

Here, in general, although the symbols are variably displayed and stopped in the variable display portions 21 to 25 based on the first reel strip 111 ~ the fifth reel strip 115 (see Fig. 8), the symbols are variably displayed and stopped in the variable display portion 21 by the sixth reel strip 116 - the eighth reel strip 118 (see Fig. 15) in a case that the slot machine is in the high possibility mode, the maximum possibility mode or the low possibility mode.

And in the payout process in S50, according to the winning symbol combination stopped and displayed in each of the variable display portions 21 to 25 in S49, the credit corresponding to the payout determined on the basis of the payout table 51B in Fig. 12 (however, in the bonus game, the symbol "SHARK" is regarded as the symbol "LOBSTER") is paid out.

Thereafter, in S51, the CPU 50 reads out the game number T of the bonus game stored in the RAM 52 and subtracts "1" from the game number T read out. And the game number T, which is subtracted, is again stored in the RAM 52.

Next, in S52, the CPU 50 determines whether or not the game number T of the bonus game reaches to a number of times determined in S41. Concretely, it is determined whether or not the game number T stored in the RAM 52 becomes "0". And if the game number T is not "0", that is, if it is determined that the execution number of times of the bonus game does not reach to the number of times determined in S41 (S52: NO), procedure returns to S42 and the above processes are repeated. On the other hand, if it is determined that the game number T is "0", that is, the game number T reaches to the number of times determined in S41 (S52: YES), the bonus game process program is terminated.

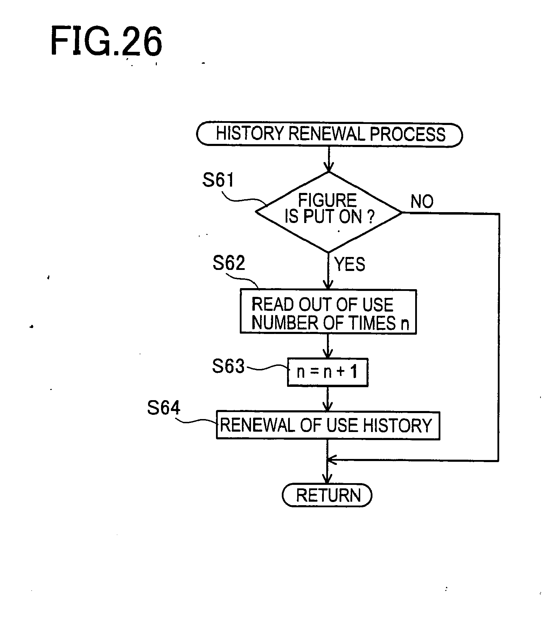

Next, the history renewal process conducted in S6 will be described with reference to Fig. 26. Fig. 26 is a flowchart of the history renewal process program executed in the slot machine of the first embodiment.

In the history renewal process, at first, in S61, it is determined whether or not one of the figures 13A - 13C is put on the verification unit 7, based on the determination result in S14. And if it is determined that any of the figures 13A - 13C is not put on the verification unit 7 (S61: NO), the history renewal process is terminated.

On the other hand, if it is determined that any of the figures 13A - 13C is put on the verification unit 7 (S61: YES), the number of times n, according to which the figure is used, stored in the use history memory area 93B (see Fig. 5) is read out through the IC tag reader/writer 107, among the data of the IC tag 93 embedded in the figure put on the verification unit 7 (S62).

Continuous to the above, in S63, the CPU 50 adds "1" to the number of times n read out. Further, the added number of times n is again stored in the RAM 52, thereby the use history renewal is conducted (S64: YES). Thereafter, the history renewal process is terminated.

As mentioned in the above, according to the slot machine 1 of the first embodiment, the player plays the game while putting the figures 13A ~ 13C on the slot machine 1 (S14: YES), thereby the kind of the figure and the use history thereof are read out (S15) from the IC tag 93 embedded in the figures 13A - 13C and the change pattern is specified based on the kind of the figure and the use history read out (S16). And the game setting condition determined on the basis of the present date and the specified change pattern are adopted to the slot machine 1. Accordingly, the player can play the game according to various change patterns each of which corresponds to one of the figures 13A ~ 13C used by the player. And in a case that the player wants to play the game with stability, the player puts the figure 13A on the verification unit 7, thereby the player can play the game based on the game setting condition which is comparatively stable (game setting condition with comparatively less changes). And in a case that the player wants to play the game with gambling characteristic, the player puts the figure 13B on the verification unit 7, thereby the player can play the game based on the game setting condition which has high gambling characteristic (game setting condition with more changes). Further, in a case that the player wants to play the game with higher gambling characteristic, the player puts the figure 13C on the verification unit 7, thereby the player can play the game based on the game setting condition the gambling characteristic of which is made extremely high (game setting condition with extremely more changes). Therefore, by using the figures 13A - 13C, the game can be conducted according to the variegated game setting conditions based on which the game result is changed every the game is conducted, thus the player does not lose interest for the game. And the player can select the change pattern of the game mode among various change patterns by himself or herself, thereby the game with high game characteristic satisfying various desires of the player can be provided.

Further, based on that the player repeatedly uses the figures 13A - 13C in the slot machine 1 in many times, the game can be conducted based on the change pattern in which the terms set in the high possibility mode or the maximum possibility mode gradually become long so as to be beneficial for the player (see Figs. 14 and 20). Therefore, chance that the player buys and uses the figures 13A - 13C can be increased, and expectation of the player for the game can be increased and interest of the player can be improved.

And the background color displayed on the lower liquid crystal display 4 is changed based on the present game setting condition, thereby feelings of the player playing the game can be raised on the basis of the background color and expectation and tension of the player for the game result can be raised.

### (Second Embodiment)

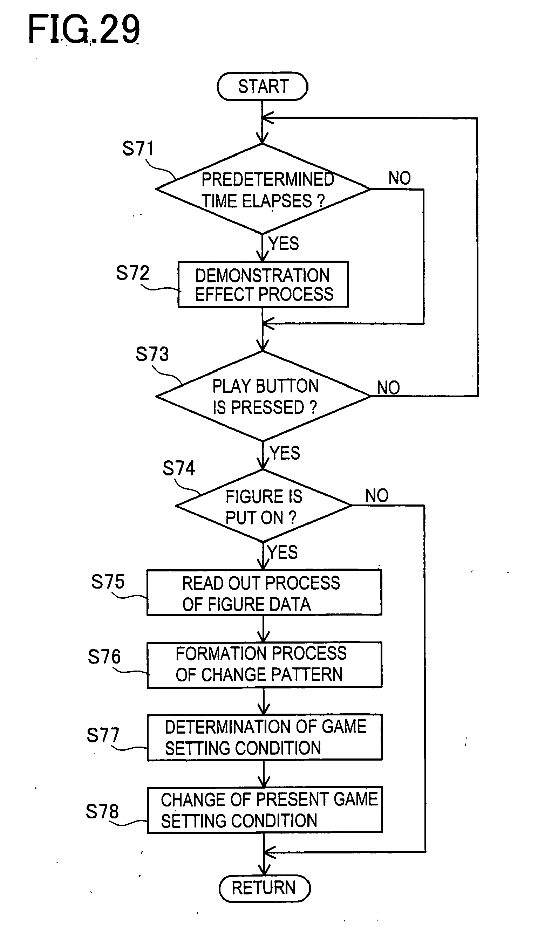

Next, the slot machine according to the second embodiment will be described with reference to Fig. 29. Here, in explanation mentioned hereinafter, the same marks in the second embodiment used in the slot machine 1 of the first embodiment shown in Figs. 1 to 28 indicate the same construction in the slot machine 1 of the first embodiment or the portions corresponding thereto.

Outline construction of the slot machine according to the second embodiment is substantially as same as that of the slot machine 1 of the first embodiment. And various control processes in the second embodiment are substantially as same as those in the slot machine 1 of the first embodiment.

However, the slot machine of the second embodiment is different from the slot machine 1 of the first embodiment as follows. That is, although in the slot machine 1 of the first embodiment the change pattern is determined among the change patterns (pattern A1~pattern C3) based on the change pattern selection table 51D (S16), in the slot machine of the second embodiment the change pattern is formed based on the kind of the figures 13A - 13C put on and the use history.

Hereinafter, the start acceptance process program in the slot machine of the second embodiment will be described with reference to Fig. 29. Fig. 29 is a flowchart of the start acceptance process program used in the slot machine of the second embodiment. Here, the programs shown by the flowchart in Fig. 29 are stored in the ROM 51 and the RAM 52 provided in the slot machine of the second embodiment, and are executed by the CPU 50.

Here, the processes in S71 - 73 are as same as the processes of S11 ~ S13 in the start acceptance process program (see Fig. 22) used in the slot machine 1 of the first embodiment, thus explanation thereof will be omitted.

In S74, it is determined whether or not one of the figures 13A - 13C (see Fig. 4) is put on the verification unit 7. Concretely, it is determined whether or not data transmission can be done with the IC tag 93 embedded in the stand portion 90 of the figures 13A ~ 13C through the IC tag reader/writer 107. And if it is determined that any of the figures 13A - 13C is not put on the verification unit 7 (S74: NO), the start acceptance process is terminated, and procedure shifts to the lottery process (S2).

On the other hand, if it is determined that any of the figures 13A - 13C is put on the verification unit 7 (S74: YES), the data of the IC tag 93 embedded in the figure put on are read out through the IC tag reader/writer 017 (S75). Here, as the data read out, there exist the figure ID which is the peculiar value every each of the figures 13A~ 13C and the game number n according to which the game is conducted by using the figure 13 put on the slot machine 1.

Next, in S76, based on the figure ID read out in S15 and the game number n, the change pattern is formed. In order to form the change pattern, the program necessary therefor is stored in the ROM 51 beforehand, and the change pattern formation process is executed by the program based on the figure ID and the game number n, thereby the change pattern is formed.

And in S77, the game setting condition in the present game is determined based on the change pattern formed in S76 and the present date determined by the timer 87. The game setting condition concretely determined in the slot machine of the second embodiment is the symbol column variably displayed and stopped in the variable display portion 21 and the background displayed on the lower liquid crystal display 4. The symbols are variably displayed and stopped by the symbol column of the first reel strip 111 in the normal mode, the symbols are variably displayed and stopped by the symbol column of the sixth reel strip 116 in the high possibility mode, the symbols are variably displayed and stopped by the symbol column of the eighth reel strip 118 in the low possibility mode and the symbols are variably displayed and stopped by the symbol column of the seventh reel strip 117 in the maximum possibility mode (see Figs. 15 ~ 19). -

On the other hand, the background image displayed on the lower liquid crystal display 4 is set to the background color as follows. That is, the background color is set to white color in the normal mode, the background color is set to yellow color in the high possibility mode, the background color is set to blue color in the low possibility mode and the background color is set to red color in the maximum possibility mode. Concretely, the image control CPU 83 determines the background image among the dot data stored beforehand in the image ROM 82, according to the image control program stored beforehand in the program ROM 81 based on the parameters set by the CPU 50. And the VDP 85 forms the background image corresponding to display contents determined by the image control CPU 83 and outputs to the lower liquid crystal display 4.

Thereafter, in S78, the game setting condition of the slot machine 1 at present is changed to the game setting condition determined in S77. Here, in the slot machine 1 of the second embodiment, although the game setting condition changed is the symbol column variably displayed and stopped in the variable display portion 21, for example, the game setting condition concerning with effect contents displayed on the lower liquid crystal display 4 may be done. And the payout rate may be concretely set (for example, payout rate is set to 95 % or 90 %).

After the game setting condition is changed, the start acceptance process is terminated and procedure shifts to the lottery process (S2).

As mentioned in the above, according to the slot machine 1 of the second embodiment, the player plays the game while putting the figures 13A ~ 13C on the slot machine 1 (S74: YES), thereby the kind of the figure and the use history thereof are read out (S75) from the IC tag 93 embedded in the figures 13A ~ 13C and the change pattern is formed based on the kind of the figure and the use history read out (S76). And the game setting condition determined on the basis of the present date and the formed change pattern are adopted to the slot machine 1. Accordingly, the player can play the game according to various change patterns each of which corresponds to one of the figures 13A - 13C used by the player. Therefore, by using the figures 13A - 13C, the game can be conducted according to the variegated game setting conditions based on which the game result is changed every the game is conducted, thus the player does not lose interest for the game.

And the background color displayed on the lower liquid crystal display 4 is changed based on the present game setting condition, thereby feelings of the player playing the game can be raised on the basis of the background color and expectation and tension of the player for the game result can be raised.

### (Third Embodiment)

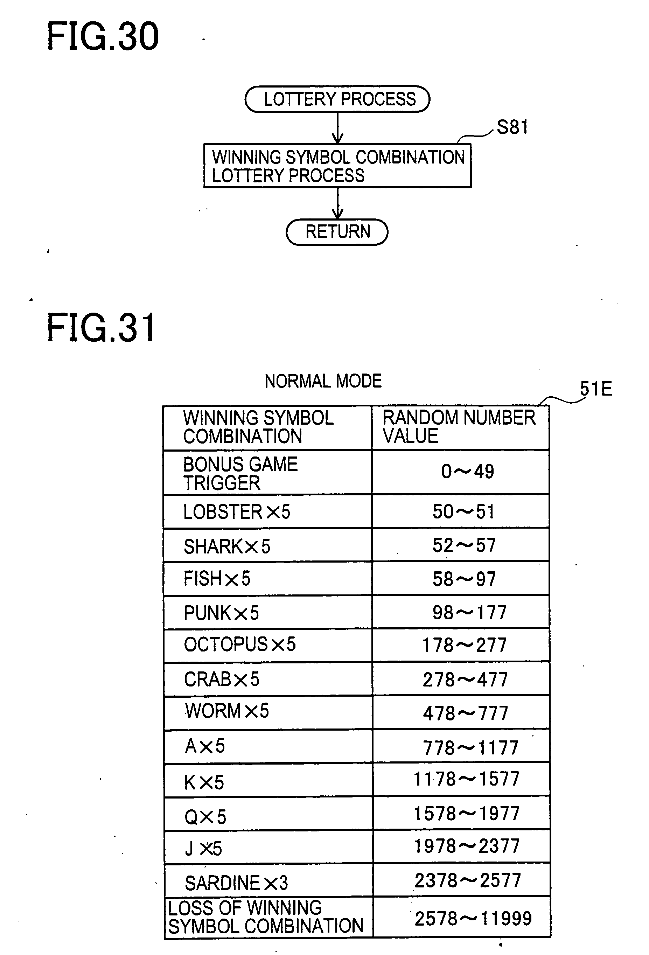

Next, the slot machine according to the third embodiment will be described with reference to Figs. 30 to 32. Here, in explanation mentioned hereinafter, the same marks in the third embodiment used in the slot machine 1 of the first embodiment shown in Figs. 1 to 28 indicate the same construction in the slot machine 1 of the first embodiment or the portions corresponding thereto.

Outline construction of the slot machine according to the third embodiment is substantially as same as that of the slot machine 1 of the first embodiment. And various control processes in the third embodiment are substantially as same as those in the slot machine 1 of the first embodiment.

However, the slot machine of the third embodiment is different from the slot machine 1 of the first embodiment as follows. That is, in the slot machine 1 of the first embodiment, when the symbols are controlled to stop in the variable display portions 21 to 25, five random number values corresponding to each of the variable display portions 21 to 25 are sampled through the random number sampling circuit 56 and the symbols stopped are determined (S21) based on the random number values, code Nos. determined by the symbol lottery table 51A and the first reel strip 111 - the fifth reel strip 115 (instead of the first reel strip 111, the sixth reel strip in the high possibility mode, the eighth reel strip 118 in the low possibility mode, the seventh reel strip 117 in the maximum possibility mode), and further the winning symbol combination and the payout thereof are determined (S22) based on the symbols stopped and displayed and the payout table 51B shown in Fig 12. On the contrary, in the slot machine 1 of the third embodiment, the winning symbol combination is directly determined based on the random number values.

And in the slot machine 1 of the first embodiment, when the game setting condition is set in the high possibility mode, the low possibility mode and the maximum possibility mode, the symbol column for the symbol variably displayed and stopped in the variable display portion 21 is changed to the sixth reel strip 116 ~ the eighth reel strip 118 from the first reel strip 111, thereby possibility to win the winning symbol combination is changed (as a result, payout rate is also changed). On the contrary, in the slot machine 1 of the third embodiment, the table used when the winning symbol combination is determined based on the random number values is changed. Therefore, in the slot machine of the third embodiment, it is not required that the reel strip is changed in order to change possibility to win the winning symbol combination, thereby the third embodiment can be adopted to not only the slot machine using the video reels, which is explained hereinafter, but also the slot machine using mechanical reels.

At first, in the slot machine of the third embodiment, the lottery process executed in S2 in the main process program will be described with reference to Fig. 30. Fig. 30 is a flowchart of the lottery process program executed in the slot machine of the third embodiment. Here, programs shown by the flowchart in Fig. 30 are stored in the ROM 51 and the RAM 52 provided in the slot machine and executed by the CPU 50.

In the lottery process, at first, the winning symbol combination lottery process is conducted in S81. Here, the lottery of the winning symbol combination controlled to stop in the variable display portions 21 to 25 in the base game is conducted by the CPU 50 while using the winning symbol combination lottery table 51E - 51H. And after the winning symbol combination is determined, procedure returns to the main process program and shifts to the base game process in S3. And in the base game process, the symbols are stopped and displayed based on the winning symbol combination determined.

Next, the winning symbol combination lottery tables 51E - 51H used in the winning symbol combination lottery process of S81 will be described.

In the slot machine 1 of the third embodiment, in the ROM 51, there are stored the winning symbol combination lottery table 51E used for the lottery of the winning symbol combination in the normal mode, the winning symbol combination lottery table 51F used for the lottery of the winning symbol combination in the high possibility mode, the winning symbol combination lottery table 51G used for the lottery of the winning symbol combination in the low possibility mode and the winning symbol combination lottery table 51H used for the lottery of the winning symbol combination in the maximum possibility mode, and the winning symbol combination is determined in the normal mode based on the winning symbol combination lottery table 51E for the normal mode. Further, in the high possibility mode, the winning symbol combination is determined based on the winning symbol combination lottery table 51F for the high possibility mode. And in the low possibility mode, the winning symbol combination is determined based on the winning symbol combination lottery table 51G for the low possibility mode. Further, in the maximum possibility mode, the winning symbol combination is determined based on the winning symbol combination lottery table 51H for the maximum possibility mode.

At first, with reference to Fig. 31, the winning symbol combination lottery table 51E used in the normal mode will be described. Fig. 31 is an explanatory view showing the winning symbol combination lottery table for the normal mode, the table being used in the third embodiment.

As shown in Fig. 31, a range of the random number value used in the winning symbol combination lottery table 51E for the normal mode, lies in 0 - 11999. If the random number value sampled through the random number sampling circuit 56 lies in a range of 0 - 49, the trigger of the bonus game is won. In this case, more than four symbols "SARDINE" are displayed and stopped at the same time with no relation to the activated pay lines, and the game state shifts to the bonus game. And if the random number value sampled through the random number sampling circuit 56 lies in a range of 50 - 51, the winning symbol combination of "LOBSTER" is won. And more than five symbols "LOBSTER" are displayed and stopped on the activated pay line. And the random number value sampled through the random number sampling circuit 56 lies in a range of 52 - 57, the winning symbol combination of "SHARK" is won. And more than five symbols "SHARK" are displayed and stopped on the activated pay line. Hereinafter, similar to the above cases, if the random number value lies in a range of 58 - 97, the winning symbol combination of "FISH" is won. If the random number value lies in a range of 98 - 177, the winning symbol combination of "PUNK" is won. If the random number value lies in a range of 178 - 277, the winning symbol combination of "OCTOPUS" is won. If the random number value lies in a range of 278 - 477, the winning symbol combination of "CRAB" is won. If the random number value lies in a range of 478 - 777, the winning symbol combination of "WORM" is won. If the random number value lies in a range of 778 - 1177, the winning symbol combination of "A" is won. If the' random number value lies in a range of 1178 - 1577, the winning symbol combination of "K" is won. If the random number value lies in a range of 1578 - 1977, the winning symbol combination of "Q" is won. If the random number value lies in a range of 1978 - 2377, the winning symbol combination of "J" is won. If the random number value lies in a range of 2378 - 2577, three symbols "SARDINE" are displayed and stopped with no relation to the activated pay lines.

On the other hand, if the random number value sampled through the random number sampling circuit 56 lies in a range of 2578 - 11999, any of the winning symbol combinations is lost and the symbol combination not corresponding to any of the winning symbol combinations is displayed and stopped.

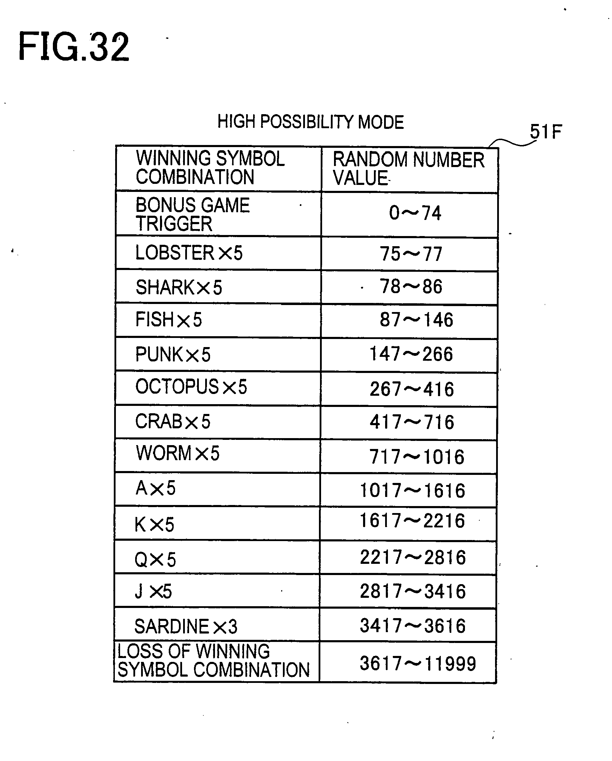

Next, with reference to Fig. 32, the winning symbol combination lottery table 51F for the high possibility mode used therein will be described. Fig. 32 is an explanatory view showing the winning symbol combination lottery table for the high possibility mode used in the third embodiment.

As shown in Fig. 32, a range of the random number value used in the winning symbol combination lottery table 51F for the high possibility mode, lies in 0 - 11999, similar to the winning symbol combination lottery table 51E for the normal mode. If the random number value sampled through the random number sampling circuit 56 lies in a range of 0 - 74, the trigger of the bonus game is won. In this case, more than four symbols "SARDINE" are displayed and stopped at the same time with no relation to the activated pay lines, and the game state shifts to the bonus game. And if the random number value sampled through the random number sampling circuit 56 lies in a range of 75 - 77, the winning symbol combination of "LOBSTER" is won. And more than five symbols "LOBSTER" are displayed and stopped on the activated pay line. And the random number value sampled through the random number sampling circuit 56 lies in a range of 78 - 86, the winning symbol combination of "SHARK" is won. And more than five symbols "SHARK" are displayed and stopped on the activated pay line. Hereinafter, similar to the above cases, if the random number value lies in a range of 87 - 146, the winning symbol combination of "FISH" is won. If the random number value lies in a range of 147 - 266, the winning symbol combination of "PUNK" is won. If the random number value lies in a range of 267 - 416, the winning symbol combination of "OCTOPUS" is won. If the random number value lies in a range of 417 - 716, the winning symbol combination of "CRAB" is won. If the random number value lies in a range of 717 - 1016, the winning symbol combination of "WORM" is won. If the random number value lies in a range of 1017 - 1616, the winning symbol combination of "A" is won. If the random number value lies in a range of 1617 - 2216, the winning symbol combination of "K" is won. If the random number value lies in a range of 2217 - 2816, the winning symbol combination of "Q" is won. If the random number value lies in a range of 2817 - 3416, the winning symbol combination of "J" is won. If the random number value lies in a range of 3417 - 3616, three symbols "SARDINE" are displayed and stopped with no relation to the activated pay lines.

On the other hand, if the random number value sampled through the random number sampling circuit 56 lies in a range of 3617 - 11999, any of the winning symbol combinations is lost and the symbol combination not corresponding to any of the winning symbol combinations is displayed and stopped.

Here, for example, possibility that the trigger of the bonus game is won and more than four symbols "SARDINE" are displayed and stopped at the same time, is 50/12000 in the normal mode and 75/12000 in the high possibility mode. And possibility that the winning symbol combination of "LOBSTER" is won and more than five symbols "LOBSTER" are displayed and stopped on the activated pay line, is 2/12000 in the normal mode and 3/12000 in the high possibility mode. Similarly, in the other winning symbol combinations, possibility to win the winning symbol combination in the high possibility mode becomes higher than that in the normal mode. Therefore, based on the game mode shifts to the high possibility mode, player can obtain more payout with the same bet number than that in the normal mode (payout rate increases).

Here, although the other tables will be omitted, in the winning symbol combination lottery table 51G for the low possibility mode the range of the random number values is set so that possibility to win the winning symbol combination in the low possibility mode becomes lower than that in the normal mode. Therefore, based on the game mode shifts to the low possibility mode, the player can obtain less payout with the same bet number than that in the normal mode (payout rate decreases).

Further, in the winning symbol combination lottery table 51H for the maximum possibility mode the range of the random number values is set so that possibility to win the winning symbol combination in the maximum possibility mode becomes extremely higher than that in the high possibility mode. Therefore, based on the game mode shifts to the maximum possibility mode, the player can obtain extremely more payout with the same bet number than that in the high possibility mode (payout rate extremely increases).

In the above, although the lottery process in the base game is only described, the winning symbol combination lottery tables 51E ~ 51H are used in the bonus game, similarly to the above case.

As mentioned in the above, in the slot machine 1 of the third embodiment, based on that the player plays the game while putting one of the figures 13A - 13C on the slot machine 1, thereby the kind of the figure and the use history thereof are read out from the IC tag 93 embedded in the figures 13A - 13C and the change pattern is selected based on the kind of the figure and the use history read out. And the game setting condition determined on the basis of the present date and the selected change pattern are adopted to the slot machine 1. Accordingly, the player can play the game according to various change patterns each of which corresponds to one of the figures 13A - 13C used by the player. Therefore, by using the figures 13A - 13C, the game can be conducted according to the variegated game setting conditions based on which the game result is changed every the game is conducted, thus the player does not lose interest for the game.

Here, the present invention is not limited to the embodiments and various modifications and changes can be done within the scope of the present invention.

For example, in the first to the third embodiments, although the game is conducted in the slot machine 1 by using the figures 13A - 13C (see Fig. 4) shaped in the characters ("man soldier", "witch", "poet singing poem") and the IC tag 93 storing various data is embedded in the stand portion 90 of each of the figures, an IC card in which the IC tag is embedded instead of the figure may be used. And by printing the character (for example, 0001 is "man soldier", 0002 is "witch" and 0003 is "poet singing poem") corresponding to the ID stored in the IC tag on the surface of the ID card, the player can play the game according to various change patterns each of which corresponds to the IC card used by the player.

And in the first to the third embodiments, although the use history of each of the figures 13A ~ 13C is stored in the IC tag 93 of each of the figures, such use history may be stored in the memory area within the slot machine 1 corresponding to the ID of each of the figures.

Further, in the first embodiment, although each of the change patterns (pattern A1~ pattern C3) is stored in the memory area within the slot machine and, based on the change pattern selection table 51D (see Fig. 20), which is similarly stored in the memory area, the change pattern is selected, the change pattern may be stored beforehand in the IC tag 93 of each of the figures 13A - 13C. Thereby, the player can play the game according to various change patterns each of which corresponds to one of the figures used by the player.

## Claims

1. A gaming machine comprising:
an object in which discriminative information is stored;
a reading device provided in the gaming machine, the reading device reading out the discriminative information stored in the object;
a plurality of change patterns, each of the change patterns corresponding to the discriminative information and having plural game setting conditions;
a change pattern determination device for determining the change pattern among plural change patterns based on the discriminative information read out by the reading device;
a game setting condition determination device for determining the game setting condition based on the change pattern determined by the change pattern determination device; and
a game control device for controlling a game according to the game setting condition determined by the game setting condition determination device.

2. The gaming machine according to claim 1, wherein a plurality of the objects exist, and
wherein the discriminative information of each object includes object specifying data and use history data of the object.

3. The gaming machine according to claim 2, wherein each of the change patterns corresponds to the object specifying data and the use history data.

4. The gaming machine according to claim 1, 2 or 3 further comprising:
a timer device for counting a present date,
wherein each of the game setting conditions in the change pattern corresponds to the present date counted by the timer device, and
wherein the game setting condition determination device determines the game setting condition among the game setting conditions in the change pattern based on the present date.

5. The gaming machine according to claim 1, 2, 3 or 4 further comprising:
an IC tag embedded in the object, the IC tag storing the object specifying data and the use history data of the object.

6. The gaming machine according to claim 5, wherein the object specifying data correspond to an object ID number and the use history data correspond to a use number of times of the object.

7. The gaming machine according to claim 5 or 6 further comprising:
a renewal device for renewing the use history data stored in the IC tag every the object is used.

8. The gaming machine according to any one of the preceding claims further comprising:
a payout device for paying out game media corresponding to a winning symbol combination;
wherein each of the game setting conditions is set corresponding to change of possibility to win the winning symbol combination.

9. The gaming machine according to claim 8, further comprising:
a reel display device for displaying a plurality of reels each of which has symbols and is rotated so as to variably display and stop the symbols;
a plurality of reel strips more than the reels displayed through the reel display device, each of the reel strips being constructed from a symbol column with the symbols;
wherein the possibility to win the winning symbol combination is changed by exchanging one reel strip with another reel strip.

10. The gaming machine according to claim 9, further comprising:
a color changing device for changing a color of a background image displayed on the reel display device;
wherein the color changing device changes the color of the background image corresponding to the game setting condition by selecting one color among plural colors.

11. The gaming machine according to claim 8, 9 or 10 further comprising:
a plurality of winning symbol combination lottery tables each of which is formed corresponding to each of the game setting conditions;
wherein the winning symbol combination lottery table is selected based on the game setting condition determined by the game setting condition determination device; and
wherein the winning symbol combination is determined according to the winning symbol combination lottery table by a lottery.

12. The gaming machine according to any one of the preceding claims further comprising:
a memory device for storing plural change patterns;
wherein the change pattern determination device determines the change pattern among plural change patterns based on the discriminative information read out by the reading device and the memory device.
